# EUROPEAN PATENT SPECIFICATION

(11) **EP 3 219 776 B1**
(45) Date of publication and mention of the grant of the patent: **24.07.2019**
(21) Application number: 15859543.9
(22) Date of filing: 25.09.2015
(51) Int. Cl.: C09K 19/54, C08F 10/14, C08F 20/18, C08G 59/20, C08G 65/18, C09K 19/12, C09K 19/14, C09K 19/20, C09K 19/30, C09K 19/32, C09K 19/34, C09K 19/38, G02F 1/13, C09K 19/52, G02F 1/137, C09K 19/04

(54) **LIQUID CRYSTAL COMPOSITION AND LIQUID CRYSTAL DISPLAY DEVICE**
FLÜSSIGKRISTALLZUSAMMENSETZUNG UND FLÜSSIGKRISTALLANZEIGEVORRICHTUNG
COMPOSITION À BASE DE CRISTAUX LIQUIDES ET DISPOSITIF D'AFFICHAGE À BASE DE CRISTAUX LIQUIDES

(30) Priority: 12.11.2014 JP 2014229591
(43) Date of publication of application: 20.09.2017
(73) Proprietor: JNC Corporation, Chiyoda-ku Tokyo 100-8105 (JP); JNC Petrochemical Corporation, Tokyo 100-0004 (JP)
(72) Inventor: FURUSATO, Yoshimasa, Ichihara-shi Chiba 290-8551 (JP); SAITO Masayuki,, Ichihara-shi Chiba 290-8551 (JP)
(74) Representative: TBK
(86) International application number: PCT/JP2015/077004
(87) International publication number: WO 2016/076018

(56) References cited:
- JP-A- S62 112 131
- JP-A- 2003 138 262
- JP-A- 2007 137 986
- JP-A- 2008 170 497
- JP-A- 2011 519 985
- JP-A- 2013 144 796
- JP-A- 2014 025 025
- JP-A- 2014 040 499
- JP-A- 2014 084 462
- IVAN ROSSI ET AL: "Modeling Hindered-Amine Light Stabilizer-Promoted Polymer Stabilization: Computational Insight into the Mechanism for Nitroxyl Radical Regeneration from Aminoethers", JOURNAL OF THE AMERICAN CHEMICAL SOCIETY, vol. 121, no. 34, 1 September 1999 (1999-09-01), pages 7914-7917, XP055525976, ISSN: 0002-7863, DOI: 10.1021/ja9906655
- SHIN-ICHI YACHIGO: "Suitable Application of Antioxidants", JOURNAL OF JAPAN OIL CHEMIST'S SOCIETY, vol. 33, no. 7, 20 July 1984 (1984-07-20), pages 420-425, XP055519373,

## Description

### Technical Field

The invention relates to a liquid crystal composition, a liquid crystal display device including this composition and so forth. It relates especially to a liquid crystal composition having negative dielectric anisotropy and a liquid crystal display device including this composition and having a mode such as IPS, VA, FFS or FPA. It also relates to a liquid crystal display device with a polymer sustained alignment type.

### Technical Background

In a liquid crystal display device, a classification based on an operating mode for liquid crystal molecules includes modes such as PC (phase change), TN (twisted nematic), STN (super twisted nematic), ECB (electrically controlled birefringence), OCB (optically compensated bend), IPS (in-plane switching), VA (vertical alignment), FFS (fringe field switching) and FPA (field-induced photo-reactive alignment) . A classification based on a driving mode in the device includes PM (passive matrix) and AM (active matrix). The PM is classified into static, multiplex and so forth, and the AM is classified into TFT (thin film transistor), MIM (metal-insulator-metal) and so forth. The TFT is further classified into amorphous silicon and polycrystal silicon. The latter is classified into a high temperature type and a low temperature type depending on the production process. A classification based on a light source includes a reflection type utilizing natural light, a transmission type utilizing a backlight and a semi-transmission type utilizing both natural light and a backlight.

The liquid crystal display device includes a liquid crystal composition having a nematic phase. This composition has suitable characteristics. An AM device having good characteristics can be obtained by improving the characteristics of this composition. Table 1 below summarizes the relationship between these two characteristics. The characteristics of the composition will be further explained on the basis of a commercially available AM device. The temperature range of a nematic phase relates to the temperature range in which the device can be used. A desirable maximum temperature of the nematic phase is approximately 70 °C or higher and a desirable minimum temperature of the nematic phase is approximately -10 °C or lower. The viscosity of the composition relates to the response time of the device. A short response time is desirable for displaying moving images on the device. Response time that is one millisecond shorter than that of the other devices is desirable. Thus a small viscosity of the composition is desirable. A small viscosity at a low temperature is more desirable.

**Table 1. Characteristics of Compositions and AM Devices**

| No. | Characteristics of Compositions | Characteristics of AM Devices |
|---|---|---|
| 1 | a wide temperature range of a nematic phase | a wide temperature range in which the device can be used |
| 2 | a small viscosity | a short response time |
| 3 | a suitable optical anisotropy | a large contrast ratio |
| 4 | a large positive or negative dielectric anisotropy | a low threshold voltage and low power consumption, |
| | | a large contrast ratio |
| 5 | a large specific resistance | a large voltage holding ratio and |
| | | a large contrast ratio |
| 6 | a high stability to ultraviolet light and heat | a long service life |

The optical anisotropy of the composition relates to the contrast ratio of the device. A large optical anisotropy or a small optical anisotropy, namely a suitable optical anisotropy, is necessary depending on the mode of the device. The product (Δn×d) of the optical anisotropy (Δn) of the composition and the cell gap (d) of the device is designed so as to maximize the contrast ratio. A suitable value of the product depends on the type of operating mode. This value is in the range of approximately 0.30 micrometers to approximately 0.40 micrometers for a device having a VA mode, and in the range of approximately 0.20 micrometers to approximately 0.30 micrometers for a device having an IPS mode or an FFS mode. In these cases, a composition having a large optical anisotropy is desirable for a device having a small cell gap. A large dielectric anisotropy of the composition contributes to a low threshold voltage, low power consumption and a large contrast ratio of the device. A large dielectric anisotropy is thus desirable. A large specific resistance of the composition contributes to a large voltage holding ratio and a large contrast ratio of the device. It is thus desirable that a composition should have a large specific resistance at a high temperature as well as at room temperature in the initial stages. It is desirable that a composition should have a large specific resistance at a high temperature as well as at room temperature, after it has been used for a long time. The stability of the composition to ultraviolet light and heat relates to the service life of the device. The device has a long service life when the stability is high. Characteristics of this kind are desirable for an AM device used for a liquid crystal projector, a liquid crystal television and so forth.

A liquid crystal composition including a polymer is used for a liquid crystal display device with a polymer sustained alignment (PSA) type. First, a composition to which a small amount of polymerizable compound has been added is poured into a device. Next, the composition is irradiated with ultraviolet light, while a voltage is applied between the substrates of this device. The polymerizable compound is polymerized to give a network structure of a polymer in the composition. In this composition, the polymer makes it possible to adjust the orientation of liquid crystal molecules, and thus the response time of the device is decreased and image burn-in is improved. Such effect of the polymer can be expected for a device having a mode such as TN, ECB, OCB, IPS, VA, FFS or FPA.

A composition having positive dielectric anisotropy is used for an AM device having a TN mode. A composition having negative dielectric anisotropy is used for an AM device having a VA mode. A composition having positive or negative dielectric anisotropy is used for an AM device having an IPS mode or an FFS mode. A composition having positive or negative dielectric anisotropy is used for an AM device with a polymer sustained alignment (PSA) type. Compound (1-1) used in the invention is disclosed in the following patent document No. 1.

### Prior Art

### Patent Document

Patent document No. 1: JP 2014-025025 A.

Further, JP 2013-144796 A discloses a liquid crystalline medium containing 0.025% of a hindered amine compound , a compound having the same structure as current formulae (2), (2-1) of the present application and a compound having the same structure as current formulae (3), (3-1). Furthermore, it indicates that the liquid crystal media are used in VA, FFS or IPS display having an active matrix addressing configuration.

JP 2011-519985 A discloses a liquid crystal composition containing a hindered amine compound , a compound having the same structure as current formulae (2), (2-1) of the present application and a compound having the same structure as current formulae (3), (3-13). Furthermore, it indicates that the liquid crystal media are used in VA, FFS or IPS display having an active matrix addressing configuration.

JP S62 112131 A discloses hindered amine- or nickel complex-quenchers.

JP 2014 040499 A, JP 2008 170497 A disclose triplet quenchers like the above document No. 1 JP 2014 025025 A.

JP 2007 137986 A discloses a liquid crystal composition comprising a liquid crystal material containing radicalized liquid crystal molecules, and a radical trapping agent, which stabilizes the radicalized liquid crystal molecules.

JP 2014 084462 A discloses a liquid crystalline medium comprising a liquid crystal material and i.a. a hindered amine compound.

JP 2003 138262 A discloses a guest host type liquid crystal display element has a pair of substrates arranged in opposite directions, transparent electrode(s) and a liquid crystal layer. The liquid crystal layer containing host liquid crystal and dichromatic pigment, is clamped by the pair of substrates.

### Summary of the Invention

### Subject to be solved by the Invention

One of the aims of the invention is to provide a liquid crystal composition that satisfies at least one of characteristics such as a high maximum temperature of a nematic phase, a low minimum temperature of a nematic phase, a small viscosity, a suitable optical anisotropy, a large negative dielectric anisotropy, a large specific resistance, a high stability to ultraviolet light and a high stability to heat. Another aim is to provide a liquid crystal composition that is suitably balanced between at least two of the characteristics. A further aim is to provide a liquid crystal display device including such a composition. A further aim is to provide an AM device that has characteristics such as a short response time, a large voltage holding ratio, a low threshold voltage, a large contrast ratio and a long service life.

### Means for solving the Subject

The invention concerns a liquid crystal composition that has a nematic phase and negative dielectric anisotropy and that includes at least one quencher as a first additive and at least one compound selected from the group of compounds represented by formula (1) as a first component, and concerns a liquid crystal display device including this composition: 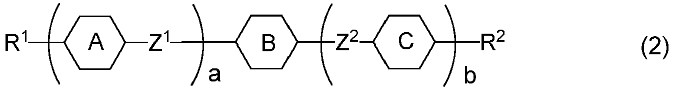 in formula (2), R¹ and R² are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine; ring A and ring C are independently 1,4-cyclohexylene, 1,4-cyclohexenylene, 1,4-phenylene, 1,4-phenylene in which at least one hydrogen has been replaced by fluorine or chlorine or tetrahydropyran-2,5-diyl; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7, 8-difluorochroman-2, 6-diyl; Z¹ and Z² are independently a single bond, ethylene, methyleneoxy or carbonyloxy; a is 1, 2 or 3, b is 0 or 1; and the sum of a and b is 3 or less.

### Effect of the Invention

One of the advantages of the invention is to provide a liquid crystal composition that satisfies at least one of characteristics such as a high maximum temperature of a nematic phase, a low minimum temperature of a nematic phase, a small viscosity, a suitable optical anisotropy, a large negative dielectric anisotropy, a large specific resistance, a high stability to ultraviolet light and a high stability to heat. Another advantage is to provide a liquid crystal composition that is suitably balanced between at least two of the characteristics. A further advantage is to provide a liquid crystal display device including such a composition. A further advantage is to provide an AM device that has characteristics such as a short response time, a large voltage holding ratio, a low threshold voltage, a large contrast ratio and a long service life.

### Embodiment to carry out the Invention

The usage of the terms in the specification and claims is as follows. "Liquid crystal composition" and "liquid crystal display device" are sometimes abbreviated to "composition" and "device," respectively. "Liquid crystal display device" is a generic term for a liquid crystal display panel and a liquid crystal display module. "Liquid crystal compound" is a generic term for a compound having a liquid crystal phase such as a nematic phase or a smectic phase, and for a compound having no liquid crystal phases but being mixed to a composition for the purpose of adjusting the characteristics, such as the temperature range of a nematic phase, the viscosity and the dielectric anisotropy. This compound has a six-membered ring such as 1,4-cyclohexylene or 1,4-phenylene, and its molecular structure is rod-like. "Polymerizable compound" is a compound that is added to a composition in order to form a polymer in it.

A liquid crystal composition is prepared by mixing a plurality of liquid crystal compounds. The ratio of a liquid crystal compound (content) is expressed as a percentage by weight (% by weight) based on the weight of this liquid crystal composition. An additive such as an optically active compound, an antioxidant, an ultraviolet light absorber, a coloring matter, an antifoaming agent, a polymerizable compound, a polymerization initiator and a polymerization inhibitor is added to this composition as required. The ratio of the additive (added amount) is expressed as a percentage by weight (% by weight) based on the weight of the liquid crystal composition in the same manner as with the liquid crystal compound. Weight parts per million (ppm) is sometimes used. The ratio of the polymerization initiator and the polymerization inhibitor is exceptionally expressed on the basis of the weight of the polymerizable compound.

"A higher limit of the temperature range of a nematic phase" is sometimes abbreviated to "the maximum temperature." "A lower limit of the temperature range of a nematic phase" is sometimes abbreviated to "the minimum temperature." That "specific resistance is large" means that a composition has a large specific resistance at a temperature close to the maximum temperature of a nematic phase as well as at room temperature in the initial stages, and that the composition has a large specific resistance at a temperature close to the maximum temperature of a nematic phase as well as at room temperature, after it has been used for a long time. That "a voltage holding ratio is large" means that a device has a large voltage holding ratio at a temperature close to the maximum temperature of a nematic phase as well as at room temperature in the initial stages, and that the device has a large voltage holding ratio at a temperature close to the maximum temperature of a nematic phase as well as at room temperature, after it has been used for a long time. In compositions or devices, characteristics before or after a long-term test (including an accelerated aging test) are studied. The expression "increase the dielectric anisotropy" means that its value increases positively when the composition has positive dielectric anisotropy, and that its value increases negatively when the composition has negative dielectric anisotropy.

A compound represented by formula (2) is sometimes abbreviated to "compound (2)." At least one compound selected from the group of compounds represented by formula (3) is sometimes abbreviated to "compound (3)." "Compound (3)" means one compound, a mixture of two compounds or a mixture of three or more compounds represented by formula (1). This applies to a compound represented by another formula. The expression "at least one 'A' " means that the number of 'A' is arbitrary. The expression "at least one 'A' may be replaced by 'B'" means that the position of 'A' is arbitrary when the number of 'A' is one, and the positions can also be selected without restriction when the number of 'A' is two or more. This rule also applies to the expression "at least one 'A' has been replaced by 'B'."

The symbol for the terminal group, R¹, is used for a plurality of compounds in the chemical formulas of component compounds. In these compounds, two groups represented by two arbitrary R¹ may be the same or different. In one case, for example, R¹ of compound (2-1) is ethyl and R¹ of compound (2-2) is ethyl. In another case, R¹ of compound (2-1) is ethyl and R¹ of compound (2-2) is propyl. The same rule applies to symbols such as another terminal group. In formula (2), two of ring A are present when a is 2. In this compound, two groups represented by two of ring A may be the same or different. The same rule applies to arbitrary two of ring A, when a is greater than 2. The same rule also applies to symbols such as Z³ and ring D. The same rule also applies to two -Sp²-P⁵ group in compound (4-27), for instance.

The symbol such as A, B or C surrounded by a hexagon corresponds to a six-membered ring or a condensed ring such as ring A, ring B or ring C, respectively. In compound (4), an oblique line crossing the hexagon means that arbitrary hydrogen on the ring may be replaced by a group such as -Sp¹-P¹. A subscript such as e means the number of the group that has been replaced. There is no replacement when the subscript is 0 (zero). A plurality of -Sp¹-P¹ are present on ring F when e is greater than 2. A plurality of groups represented by -Sp¹-P¹ may be the same or different.

The alkyl is straight-chain or branched-chain, and does not include cycloalkyl. Straight-chain alkyl is preferable to branched-chain alkyl. This applies to alkoxy, alkenyl and so forth. With regard to the configuration of 1, 4-cyclohexylene, trans is preferable to cis for increasing the maximum temperature. 2-Fluoro-1,4-phenylene means the two divalent groups described below. Fluorine may be facing left (L) or facing right (R) in a chemical formula. The same rule also applies to an asymmetric divalent group formed from a ring by removing two hydrogens, such as tetrahydropyran-2,5-diyl. The same rule also applies to a bonding group such as carbonyloxy (-COO- and -OCO-).

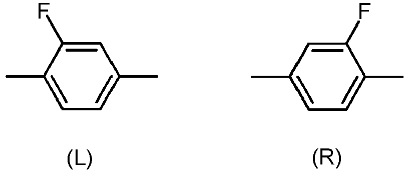

The invention includes the following items.

Item 1. A liquid crystal composition having a nematic phase and negative dielectric anisotropy and including at least one quencher as a first additive and at least one compound selected from the group of compounds represented by formula (2) as a first component: 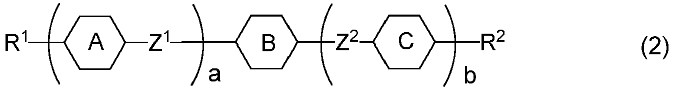 in formula (2), R¹ and R² are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine; ring A and ring C are independently 1,4-cyclohexylene, 1,4-cyclohexenylene, 1,4-phenylene, 1,4-phenylene in which at least one hydrogen has been replaced by fluorine or chlorine or tetrahydropyran-2,5-diyl; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7, 8-difluorochroman-2, 6-diyl; Z¹ and Z² are independently a single bond, ethylene, methyleneoxy or carbonyloxy; a is 1, 2 or 3, b is 0 or 1; and the sum of a and b is 3 or less.

Item 2. The liquid crystal composition according to item 1, wherein the first additive is a nonaromatic compound having conjugated double bonds, and the number of the conjugated double bonds is an integer from 2 to 10.

Item 3. The liquid crystal composition according to item 1 or 2, wherein the first additive is at least one compound selected from the group of compounds represented by formula (1-1) to formula (1-6): 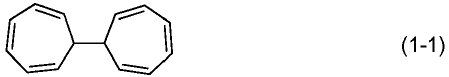 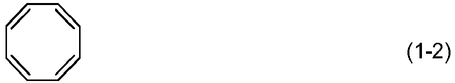 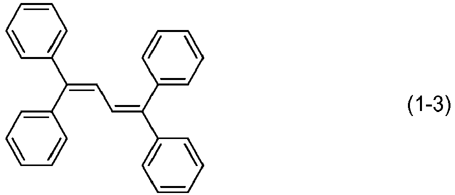 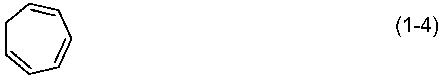 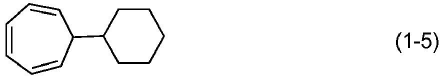 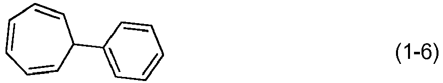 in formula (1-1) to formula (1-6), at least one hydrogen on the ring may be replaced by fluorine, chlorine, alkyl having 1 to 12 carbons, alkoxy having 1 to 12 carbons, alkenyl having 2 to 12 carbons or alkyl having 1 to 12 carbons in which at least one hydrogen has been replaced by fluorine or chlorine.

Item 4. The liquid crystal composition according to any one of items 1 to 3, wherein the first additive is at least one compound selected from the group of compounds represented by formula (1-1) to formula (1-6) :

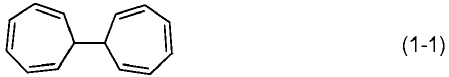

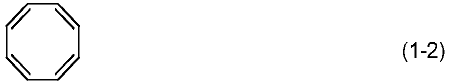

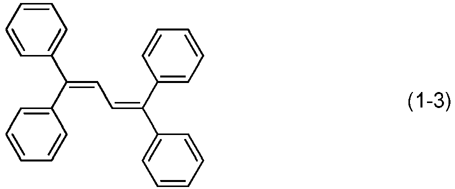

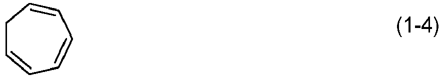

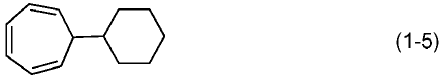

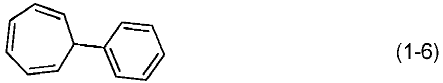

Item 5. The liquid crystal composition according to any one of items 1 to 4, wherein the ratio of the first additive is in the range of 0.005% by weight to 2% by weight based on the weight of the liquid crystal composition.

Item 6. The liquid crystal composition according to any one of items 1 to 5, including at least one compound selected from the group of compounds represented by formula (2-1) to formula (2-21) as a first component: 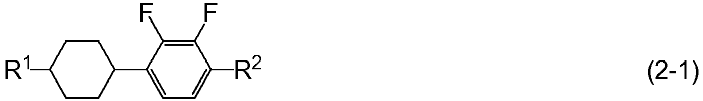 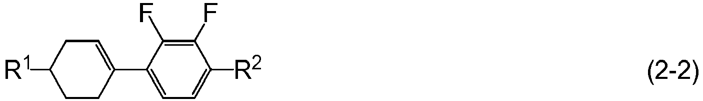 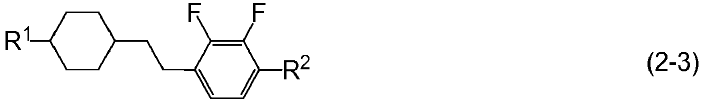 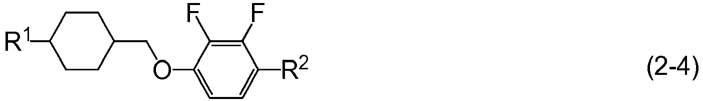 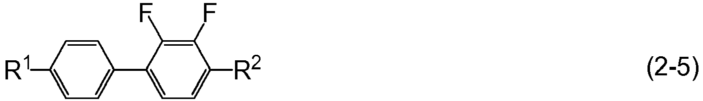 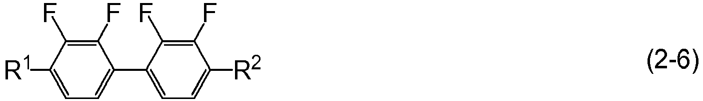 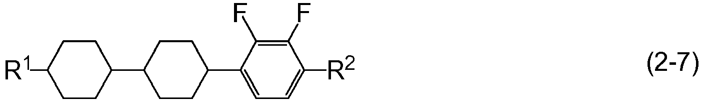 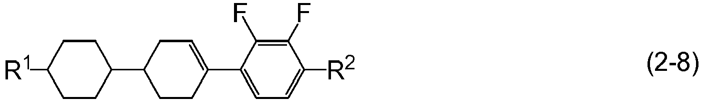 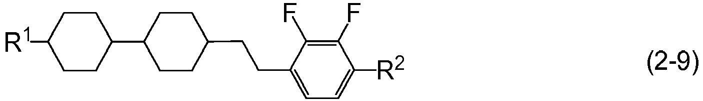 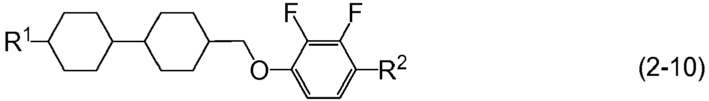 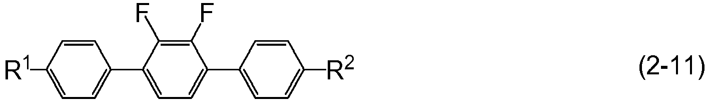 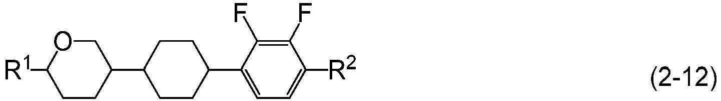 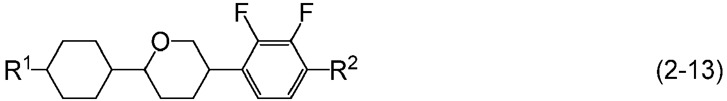 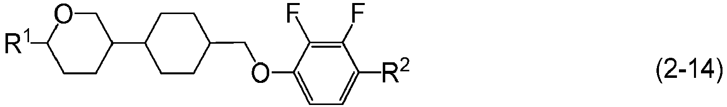 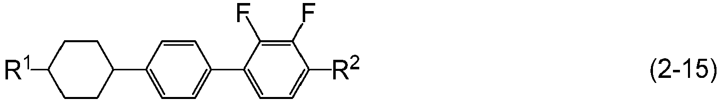 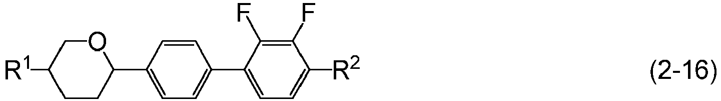 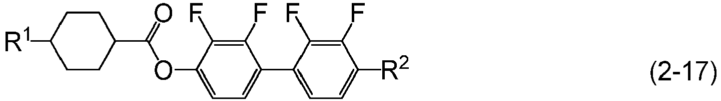 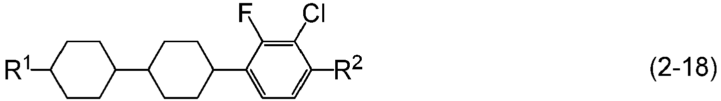 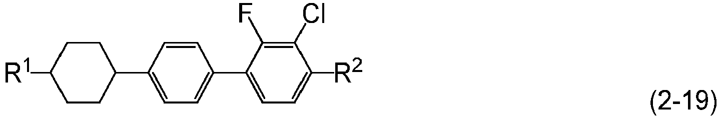 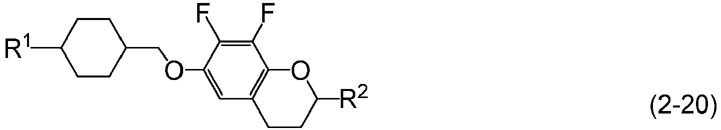 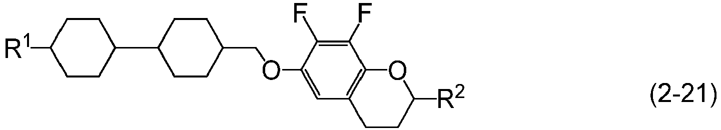 in formula (2-1) to formula (2-21), R¹ and R² are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine.

Item 7. The liquid crystal composition according to item 1 or 6, wherein the ratio of the first component is in the range of 10% by weight to 90% by weight based on the weight of the liquid crystal composition.

Item 8. The liquid crystal composition according to any one of items 1 to 7, including at least one compound selected from the group of compounds represented by formula (3) as a second component: 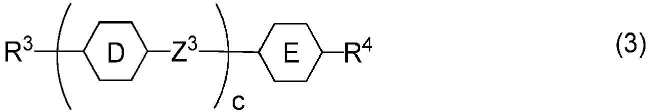 in formula (3), R³ and R⁴ are independently alkyl having 1 to 12 carbons, alkoxy having 1 to 12 carbons, alkenyl having 2 to 12 carbons or alkenyl having 2 to 12 carbons in which at least one hydrogen has been replaced by fluorine or chlorine; ring D and ring E are independently 1,4-cyclohexylene, 1,4-phenylene, 2-fluoro-1,4-phenylene or 2,5-difluoro-1,4-phenylene; Z³ is a single bond, ethylene or carbonyloxy; and c is 1, 2 or 3.

Item 9. The liquid crystal composition according to any one of items 1 to 8, including at least one compound selected from the group of compounds represented by formula (3-1) to formula (3-13) as a second component: 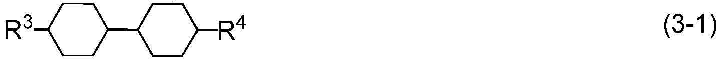 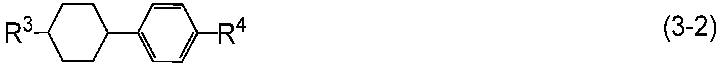 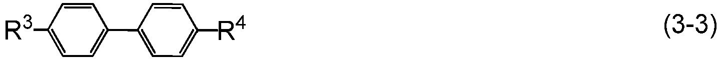 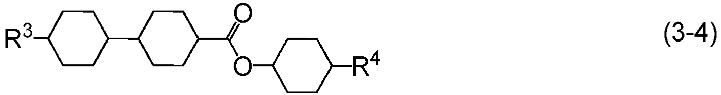 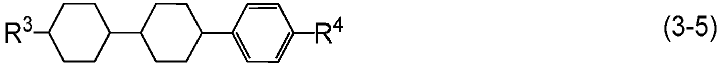 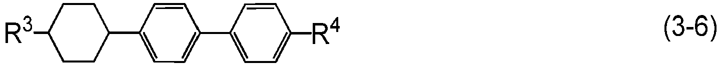 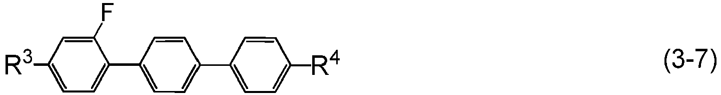 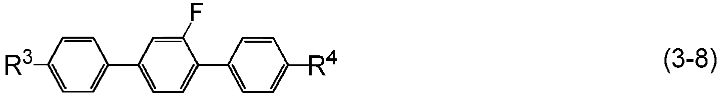 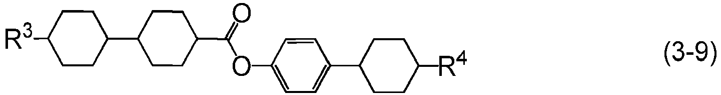 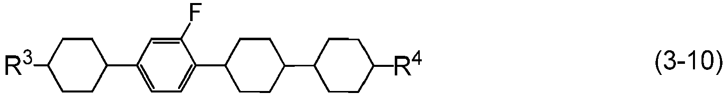 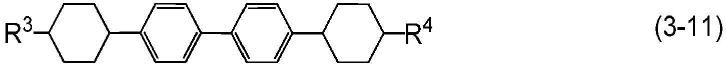 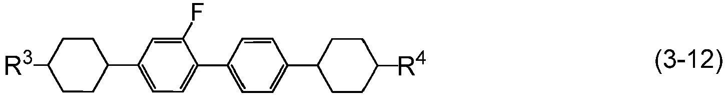 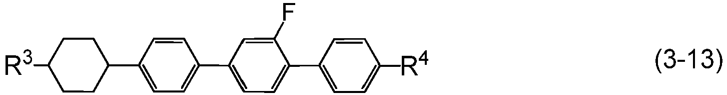 in formula (3-1) to formula (3-13), R³ and R⁴ are independently alkyl having 1 to 12 carbons, alkoxy having 1 to 12 carbons, alkenyl having 2 to 12 carbons or alkenyl having 2 to 12 carbons in which at least one hydrogen has been replaced by fluorine or chlorine.

Item 10. The liquid crystal composition according to item 8 or 9, wherein the ratio of the second component is in the range of 10% by weight to 90% by weight based on the weight of the liquid crystal composition.

Item 11. The liquid crystal composition according to any one of items 1 to 10, including at least one polymerizable compound selected from the group of compounds represented by formula (4) as a second additive: 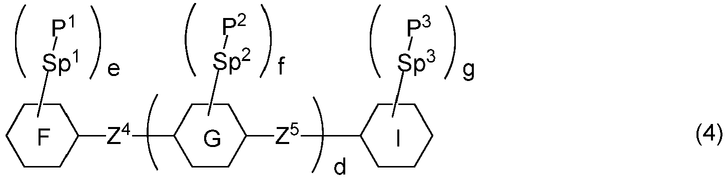 in formula (4), ring F and ring I are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in these rings at least one hydrogen may be replaced by fluorine, chlorine, alkyl having 1 to 12 carbons, alkoxy having 1 to 12 carbons or alkyl having 1 to 12 carbons in which at least one hydrogen has been replaced by fluorine or chlorine; ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in these rings at least one hydrogen may be replaced by fluorine, chlorine, alkyl having 1 to 12 carbons, alkoxy having 1 to 12 carbons or alkyl having 1 to 12 carbons in which at least one hydrogen has been replaced by fluorine or chlorine; Z⁴ and Z⁵ are independently a single bond or alkylene having 1 to 10 carbons, and in the alkylene at least one -CH₂- may be replaced by -O-, -CO-, -COO- or -OCO-, at least one -CH₂-CH₂- may be replaced by -CH=CH-, -C(CH₃)=CH-, -CH=C(CH₃)- or -C(CH₃)=C(CH₃)-, and in these groups at least one hydrogen may be replaced by fluorine or chlorine; P¹, P² and P³ are independently a polymerizable group; Sp¹, Sp² and Sp³ are independently a single bond or alkylene having 1 to 10 carbons, and in the alkylene at least one -CH₂- may be replaced by, -O-, -COO-, -OCO- or -OCOO-, at least one -CH₂-CH₂- may be replaced by -CH=CH- or -C≡C-, and in these groups at least one hydrogen may be replaced by fluorine or chlorine; d is 0, 1 or 2; e, f and g are independently 0, 1, 2, 3 or 4; and the sum of e, f and g is 1 or more.

Item 12. The liquid crystal composition according to item 11, wherein in formula (4), P¹, P² and P³ are independently a polymerizable group selected from the group of groups represented by formula (P-1) to formula (P-5): 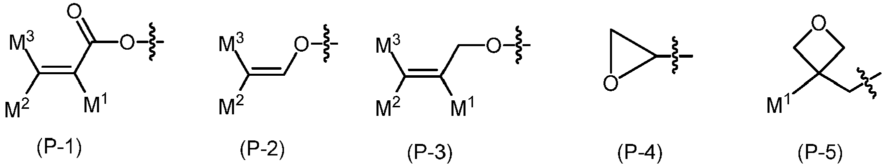 in formula (P-1) to formula (P-5), M¹, M² and M³ are independently hydrogen, fluorine, alkyl having 1 to 5 carbons or alkyl having 1 to 5 carbons in which at least one hydrogen has been replaced by fluorine or chlorine.

Item 13. The liquid crystal composition according to any one of items 1 to 12, including at least one polymerizable compound selected from the group of compounds represented by formula (4-1) to formula (4-27) as a second additive: 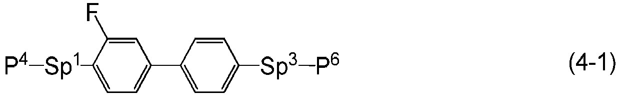 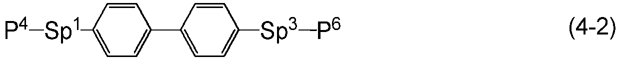 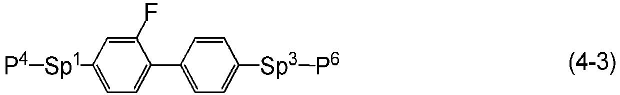 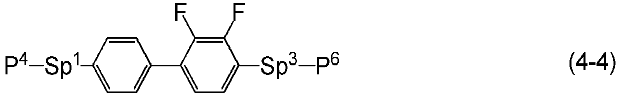 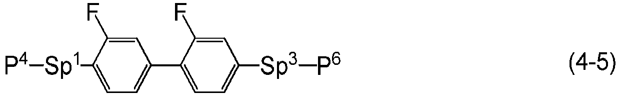 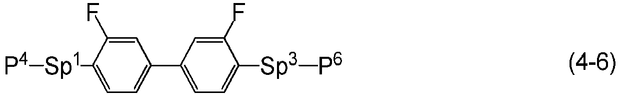 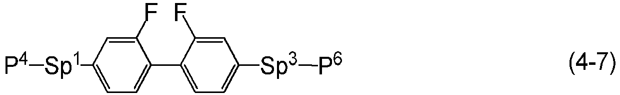 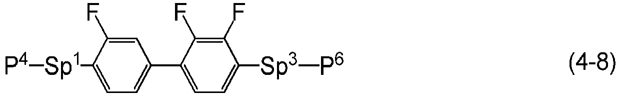 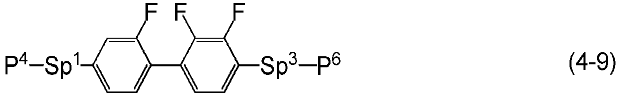 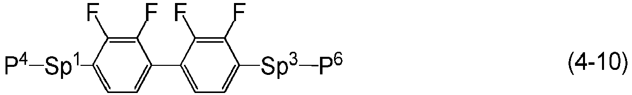 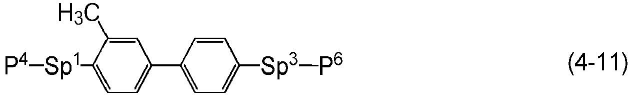 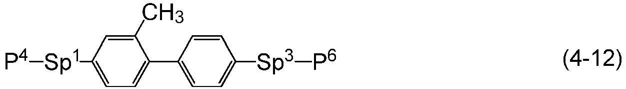 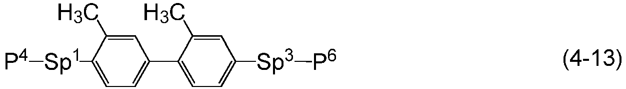 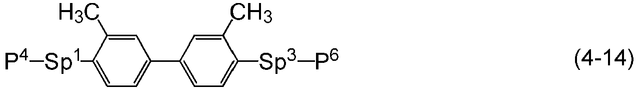 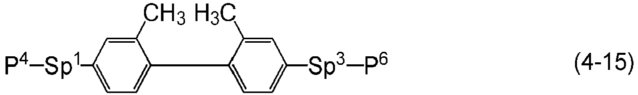 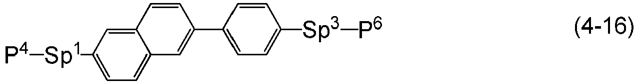 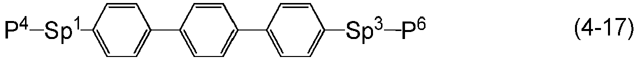 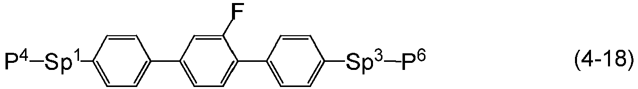 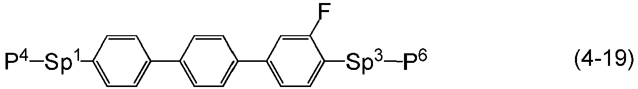 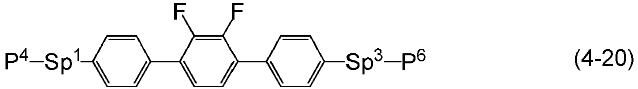 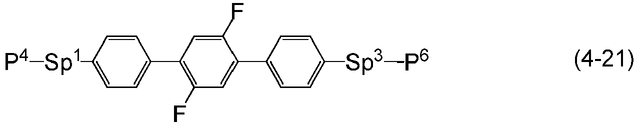 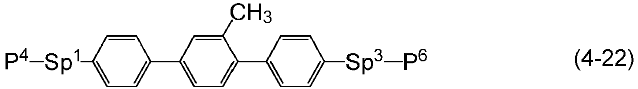 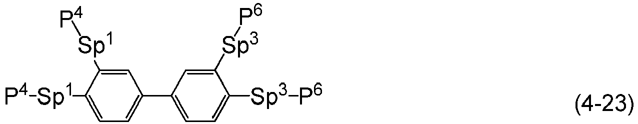 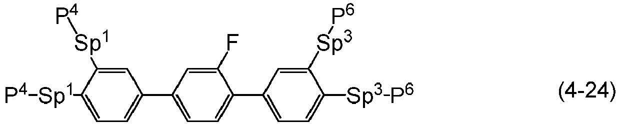 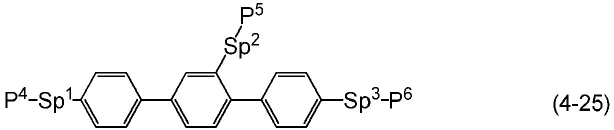 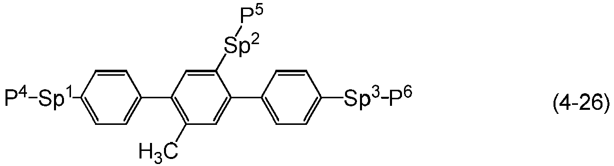 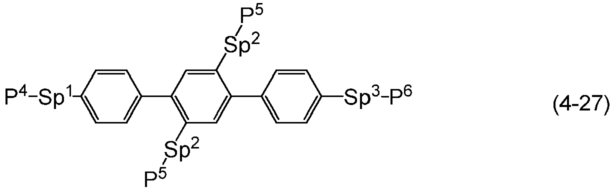 in formula (4-1) to formula (4-27), P⁴, P⁵ and P⁶ are independently a polymerizable group selected from the group of groups represented by formula (P-1) to formula (P-3), where M¹, M² and M³ are independently hydrogen, fluorine, alkyl having 1 to 5 carbons or alkyl having 1 to 5 carbons in which at least one hydrogen has been replaced by fluorine or chlorine: 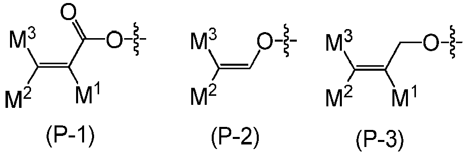 Sp¹, Sp² and Sp³ are independently a single bond or alkylene having 1 to 10 carbons, and in the alkylene at least one -CH₂- may be replaced by -O-, -COO-, -OCO- or -OCOO-, at least one -CH₂-CH₂- may be replaced by -CH=CH- or -C≡C-, and in these groups at least one hydrogen may be replaced by fluorine or chlorine.

Item 14. The liquid crystal composition according to any one of items 11 to 13, wherein the ratio of the second additive is in the range of 0.03% by weight to 10% by weight based on the weight of the liquid crystal composition.

Item 15. A liquid crystal display device including the liquid crystal composition according to any one of items 1 to 14.

Item 16. The liquid crystal display device according to item 15, wherein the operating mode of the liquid crystal display device is an IPS mode, a VA mode, an FFS mode or an FPA mode, and the driving mode of the liquid crystal display device is an active matrix mode.

Item 17. A liquid crystal display device with a polymer sustained alignment type, including the liquid crystal composition according to any one of items 11 to 14, where the polymerizable compound in the liquid crystal composition has been polymerized.

Item 18. Use of the liquid crystal composition according to any one of items 1 to 14 for the liquid crystal display device.

Item 19. Use of the liquid crystal composition according to any one of items 11 to 14 for the liquid crystal display device with a polymer sustained alignment type.

The invention further includes the following items. (a) The composition described above, including one compound, two compounds or three or more compounds selected from the group of additives such as an optically active compound, an antioxidant, an ultraviolet light absorber, a coloring matter, an antifoaming agent, a polymerizable compound, a polymerization initiator and a polymerization inhibitor. (b) An AM device including the composition described above. (c) The composition described above, further including a polymerizable compound, and an AM device with a polymer sustained alignment (PSA) type including this composition. (d) An AM device with a polymer sustained alignment (PSA) type including a composition described above, wherein a polymerizable compound in the composition is polymerized. (e) A device including the composition described above and having a mode of PC, TN, STN, ECB, OCB, IPS, VA, FFS or FPA. (f) A transmission-type device including the composition described above. (g) Use of the composition described above, as a composition having a nematic phase. (h) Use of the composition prepared by the addition of an optically active compound to the composition described above, as an optically active composition.

The composition of the invention will be explained in the following order: First, the constitution of component compounds in the composition will be explained. Second, the main characteristics of the component compounds and the main effects of these compounds on the composition will be explained. Third, a combination of the components in the composition, a desirable ratio of the components and its basis will be explained. Fourth, a desirable embodiment of the component compounds will be explained. Fifth, desirable component compounds will be shown. Sixth, additives that may be added to the composition will be explained. Seventh, methods for synthesizing the component compounds will be explained. Last, the use of the composition will be explained.

First, the constitution of component compounds in the composition will be explained. The compositions of the invention are classified into composition A and composition B. Composition A may further include any other liquid crystal compound, an additive and so forth, in addition to liquid crystal compounds selected from compound (2) and compound (3). "Any other liquid crystal compound" is a liquid crystal compound that is different from compound (2) and compound (3). Such a compound is mixed with the composition for the purpose of further adjusting the characteristics. The additive includes an optically active compound, an antioxidant, an ultraviolet light absorber, a coloring matter, an antifoaming agent, a polymerizable compound, a polymerization initiator and a polymerization inhibitor. A quencher is also classified into the additive.

Composition B consists essentially of liquid crystal compounds selected from compound (2) and compound (3). The term "essentially" means that the composition may include an additive, but does not include any other liquid crystal compound. Composition B has a smaller number of components than composition A. Composition B is preferable to composition A in view of cost reduction. Composition A is preferable to composition B in view of the fact that characteristics can be further adjusted by mixing with any other liquid crystal compound.

Second, the main characteristics of the component compounds and the main effects of these compounds on the characteristics of the composition will be explained. Table 2 summarizes the main characteristics of the component compounds based on the effects of the invention. In Table 2, the symbol L stands for "large" or "high", the symbol M stands for "medium", and the symbol S stands for "small" or "low." The symbols L, M and S mean a classification based on a qualitative comparison among the component compounds, and the symbol 0 means that the value is zero or close to zero.

**Table 2. Characteristics of Compounds**

| Compounds | Compound (2) | Compound (3) |
|---|---|---|
| Maximum Temperature | S - M | S - L |
| Viscosity | L | S - M |
| Optical Anisotropy | M - L | S - L |
| Dielectric Anisotropy | L¹⁾ | 0 |
| Specific Resistance | L | L |

| | | |
|---|---|---|
| 1) Compound having negative dielectric anisotropy. | | |

The main effects of the component compounds on the characteristics of the composition upon mixing the component compounds with the composition are as follows. The first additive (quencher) contributes to a high stability to ultraviolet light or heat. The first additive does not influence characteristics such as the maximum temperature, the optical anisotropy and the dielectric anisotropy, because the added amount is quite small. Compound (2) that is the first component increases the dielectric anisotropy and decreases the minimum temperature. Compound (3) that is the second component decreases the viscosity or increases the maximum temperature. Polymerizable compound (4) that is the second additive gives a polymer by polymerization, and this polymer decreases the response time of a device, and improves image burn-in.

A quencher is a material that causes molecules to return from the excited state to the ground state. Molecules are excited by the absorption of light. The molecules emit light when they return from the excited state to the ground state. A material that accepts energy from the excited molecules is referred to as a quencher. The quencher absorbs ultraviolet light, however, its ability is small in comparison with an ultraviolet light absorber. The difference between the quencher and the ultraviolet light absorber is as follows. An ultraviolet light absorber is a compound that absorbs ultraviolet light preferentially to a substance to be protected from ultraviolet light, and transforms the light energy to thermal energy. In contrast, a quencher is a compound that accepts the light energy absorbed by a substance to be protected and transforms it to thermal energy.

Examples of the quencher are nonaromatic compounds having conjugated double bonds. That is to say, the example includes conjugated polyenes and does not include aromatic compounds. A desirable number of the conjugated double bonds is 2 to 15. A more desirable number is 2 to 10. It is desirable that the conjugated polyenes should be cyclic, such as a seven-membered ring or an eight-membered ring. Examples of such compounds include compound (1-1), compound (1-2), and compound (1-4). These compounds may have a substituent such as cyclohexyl or phenyl. Examples of such compounds include compound (1-5) and compound (1-6). When the conjugated polyenes have a substituent, they may be straight chain. Examples of such compounds include compound (1-3) and 1,4-diphenyl-1,3-butadiene.

Third, a combination of the components in the composition, a desirable ratio of the components and its basis will be explained. A combination of the components in the composition is the first additive & first component, the first additive & first component & second component, the first additive & first component & second additive or the first additive & first component & second component & second additive. A desirable combination is the first additive & first component & second component or the first additive & first component & second component & second additive.

A desirable ratio of the first additive is approximately 0.005% by weight or more for increasing the stability to ultraviolet light or heat and approximately 2% by weight or less for decreasing the minimum temperature. A more desirable ratio is in the range of approximately 0.01% by weight to approximately 1% by weight. An especially desirable ratio is in the range of approximately 0.03% by weight to approximately 0.3% by weight.

A desirable ratio of the first component is in the range of approximately 10% by weight or more for increasing the dielectric anisotropy and approximately 90% by weight or less for decreasing the minimum temperature. A more desirable ratio is in the range of approximately 20% by weight to approximately 80% by weight. An especially desirable ratio is in the range of approximately 30% by weight to approximately 70% by weight.

A desirable ratio of the second component is in the range of approximately 10% by weight or more for increasing the maximum temperature or for decreasing the viscosity, and approximately 90% by weight or less for increasing the dielectric anisotropy. A more desirable ratio is in the range of approximately 20% by weight to approximately 80% by weight. An especially desirable ratio is in the range of approximately 30% by weight to approximately 70% by weight.

The second additive (polymerizable compound) is added to the composition for the purpose of adjusting to device with a polymer sustained alignment type. A desirable ratio of the additive is in the range of approximately 0.03% by weight or more for orienting liquid crystal molecules and approximately 10% by weight or less for preventing a poor display of a device. A more desirable ratio is in the range of approximately 0.1% by weight to approximately 2% by weight. An especially desirable ratio is in the range of approximately 0.2% by weight to approximately 1.0% by weight.

Fourth, a desirable embodiment of the component compounds will be explained. In formula (2) and formula (3), R¹ and R² are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine. Desirable R¹ or R² is alkyl having 1 to 12 carbons for increasing the stability and alkoxy having 1 to 12 carbons for increasing the dielectric anisotropy. R³ and R⁴ are independently alkyl having 1 to 12 carbons, alkoxy having 1 to 12 carbons, alkenyl having 2 to 12 carbons or alkenyl having 2 to 12 carbons in which at least one hydrogen has been replaced by fluorine or chlorine. Desirable R³ or R⁴ is alkenyl having 2 to 12 carbons for decreasing the viscosity, and alkyl having 1 to 12 carbons for increasing stability.

Desirable alkyl is methyl, ethyl, propyl, butyl, pentyl, hexyl, heptyl or octyl. More desirable alkyl is ethyl, propyl, butyl, pentyl or heptyl for decreasing the viscosity.

Desirable alkoxy is methoxy, ethoxy, propoxy, butoxy, pentyloxy, hexyloxy or heptyloxy. More desirable alkoxy is methoxy or ethoxy for decreasing the viscosity.

Desirable alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. More desirable alkenyl is vinyl, 1-propenyl, 3-butenyl or 3-pentenyl for decreasing the viscosity. A desirable configuration of -CH=CH- in the alkenyl depends on the position of the double bond. Trans is preferable in the alkenyl such as 1-propenyl, 1-butenyl, 1-pentenyl, 1-hexenyl, 3-pentenyl and 3-hexenyl for decreasing the viscosity. Cis is preferable in the alkenyl such as 2-butenyl, 2-pentenyl and 2-hexenyl.

Desirable alkenyloxy is vinyloxy, allyloxy, 3-butenyloxy, 3-pentenyloxy or4-pentenyloxy. More desirable alkenyloxy is allyloxy or 3-butenyloxy for decreasing the viscosity.

Desirable examples of alkyl in which at least one hydrogen has been replaced by fluorine are fluoromethyl, 2-fluoroethyl, 3-fluoropropyl, 4-fluorobutyl, 5-fluoropentyl, 6-fluorohexyl, 7-fluoroheptyl or 8-fluorooctyl. More desirable examples are 2-fluoroethyl, 3-fluoropropyl, 4-fluorobutyl or 5-fluoropentyl for increasing the dielectric anisotropy.

Desirable examples of alkenyl in which at least one hydrogen has been replaced by fluorine or chlorine are 2,2-difluorovinyl, 3,3-difluoro-2-propenyl, 4,4-difluoro-3-butenyl, 5,5-difluoro-4-pentenyl or 6,6-difluoro-5-hexenyl. More desirable examples are 2,2-difluorovinyl or 4,4-difluoro-3-butenyl for decreasing the viscosity.

Ring A and ring C are independently 1,4-cyclohexylene, 1,4-cyclohexenylene, 1,4-phenylene, 1,4-phenylene in which at least one hydrogen has been replaced by fluorine or chlorine or tetrahydropyran-2,5-diyl. Desirable examples of "1,4-phenylene in which at least one hydrogen has been replaced by fluorine or chlorine" are 2-fluoro-1,4-phenylene, 2,3-difluoro-1,4-phenylene or 2-chloro-3-fluoro-1,4-phenylene. Desirable ring A or ring C is 1,4-cyclohexylene for decreasing the viscosity and tetrahydropyran-2,5-diyl for increasing the dielectric anisotropy and 1,4-phenylene for increasing the optical anisotropy.

Tetrahydropyran-2,5-diyl is 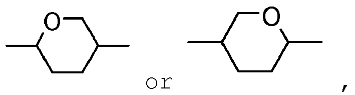 preferably

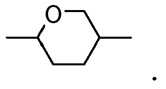

Ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl. Desirable ring B is 2,3-difluoro-1,4-phenylene for decreasing the viscosity and 2-chloro-3-fluoro-1,4-phenylene for decreasing the optical anisotropy and 7,8-difluorochroman-2,6-diyl for increasing the dielectric anisotropy.

Ring D and ring E are independently 1,4-cyclohexylene, 1,4-phenylene, 2-fluoro-1,4-phenylene or 2,5-difluoro-1,4-phenylene. Desirable ring D or ring E is 1,4-cyclohexylene for decreasing the viscosity or for increasing the maximum temperature , and 1, 4-phenylene for decreasing the minimum temperature.

Z¹ and Z² are independently a single bond, ethylene, methyleneoxy or carbonyloxy. Desirable Z¹ or Z² is a single bond for decreasing the viscosity and ethylene for decreasing the minimum temperature and methyleneoxy for increasing the dielectric anisotropy. Z³ is a single bond, ethylene or carbonyloxy. Desirable Z³ is a single bond for decreasing the viscosity.

a is 1, 2 or 3. Desirable a is 1 for decreasing the viscosity and is 2 or 3 for increasing the maximum temperature. b is 0 or 1. Desirable b is 0 for decreasing the viscosity and is 1 and 1 for decreasing the minimum temperature. c is 1, 2 or 3. Desirable c is 1 for decreasing the viscosity and is 2 or 3 for increasing the maximum temperature.

In formula (4), P¹, P² and P³ are independently a polymerizable group. Desirable P¹, P² or P³ is a polymerizable group selected from the group of groups represented by formula (P-1) to formula (P-5) . More desirable P¹, P² or P³ is group (P-1) or group (P-2). Especially desirable group (P-1) is -OCO-CH=CH₂ or -OCO-C(CH₃)=CH₂. A wavy line in group (P-1) to group (P-5) shows a binding site.

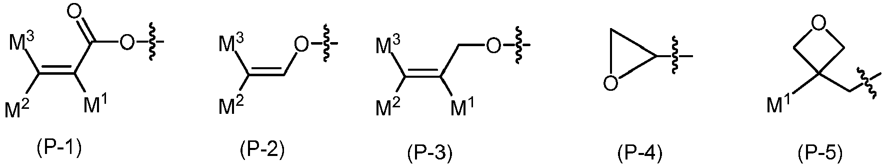

In group (P-1) to group (P-5), M¹, M² and M³ are independently hydrogen, fluorine, alkyl having 1 to 5 carbons or alkyl having 1 to 5 carbons in which at least one hydrogen has been replaced by fluorine or chlorine. Desirable M¹, M² or M³ is hydrogen or methyl for increasing the reactivity. More desirable M¹ is methyl. More desirable M² or M³ is hydrogen.

In formula (4-1) to formula (4-27), P⁴, P⁵ and P⁶ are independently a group represented by formula (P-1) to formula (P-3) . Desirable P⁴, P⁵ or P⁶ is group (P-1) or group (P-2). More desirable group (P-1) is -OCO-CH=CH₂ or -OCO-C(CH₃)=CH₂. A wavy line in group (P-1) to group (P-3) shows a binding site.

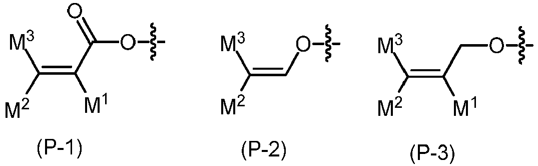

In formula (4), Sp¹, Sp² and Sp³ are independently a single bond or alkylene having 1 to 10 carbons, and in the alkylene at least one -CH₂- may be replaced by -O-, -COO-, -OCO- or -OCOO-, at least one -CH₂-CH₂- may be replaced by -CH=CH- or -C≡C-, and in these groups at least one hydrogen may be replaced by fluorine or chlorine. Desirable Sp¹, Sp² or Sp³ is a single bond, -CH₂CH₂-, -CH₂O-, -OCH₂-, -COO-, -OCO-, -CO-CH=CH- or -CH=CH-CO-. More desirable Sp¹, Sp² or Sp³ is a single bond.

Ring F and ring I are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in these rings at least one hydrogen may be replaced by fluorine or chlorine, alkyl having 1 to 12 carbons, alkoxy having 1 to 12 carbons or alkyl having 1 to 12 carbons in which at least one hydrogen has been replaced by fluorine or chlorine. Desirable ring F or ring I is phenyl. Ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in these rings at least one hydrogen may be replaced by fluorine or chlorine, alkyl having 1 to 12 carbons, alkoxy having 1 to 12 carbons or alkyl having 1 to 12 carbons in which at least one hydrogen has been replaced by fluorine or chlorine. Desirable ring G is 1,4-phenylene or 2-fluoro-1,4-phenylene.

Z⁴ and Z⁵ are independently a single bond or alkylene having 1 to 10 carbons, and in the alkylene at least one -CH₂- may be replaced by -O-, -CO-, -COO- or -OCO-, at least one -CH₂-CH₂- may be replaced by -CH=CH-, -C(CH₃)=CH-, -CH=C(CH₃)- or -C(CH₃)=C(CH₃)-, and in these groups at least one hydrogen may be replaced by fluorine or chlorine. Desirable Z⁴ or Z⁵ is a single bond, -CH₂CH₂-, -CH₂O-, -OCH₂-, -COO- or -OCO-. More desirable Z⁴ or Z⁵ is a single bond.

d is 0, 1 or 2 . Desirable d is 0 or 1. e, f and g are independently 0, 1, 2, 3 or 4, and the sum of e, f and g is 1 or more. Desirable e, f or g is 1 or 2.

Fifth, desirable component compounds will be shown. A desirable first additive is compound (1-1) to compound (1-6) according to item 2. A more desirable first additive is compound (1-1) or compound (1-2) . In these compounds, at least one hydrogen on the ring may be replaced by fluorine, chlorine, alkyl having 1 to 12 carbons, alkoxy having 1 to 12 carbons, alkenyl having 2 to 12 carbons, alkyl having 1 to 12 carbons in which at least one hydrogen has been replaced by fluorine or chlorine. Desirable examples of these substituents are fluorine, chlorine, methyl, ethyl, methoxy, fluoromethyl, difluoromethyl or trifluoromethyl. More desirable examples are fluorine, chlorine, methyl or trifluoromethyl. A compound in which at least one hydrogen on the ring has been replaced by fluorine is especially desirable. A compound having no such substituents is desirable in view of the ease of synthesis.

Desirable compound (2) is compound (2-1) to compound (2-21) according to item 4. In these compounds, it is desirable that at least one of the first component should be compound (2-1), compound (2-4), compound (2-5), compound (2-7), compound (2-10) or compound (2-15). It is desirable that at least two of the first component should be a combination of compound (2-1) and compound (2-7), compound (2-1) and compound (2-15), compound (2-4) and compound (2-7), compound (2-4) and compound (2-15) or compound (2-5) and compound (2-10).

Desirable compound (3) is compound (3-1) to compound (3-13) according to item 7. In these compounds, it is desirable that at least one of the second component should be compound (3-1), compound (3-3), compound (3-5), compound (3-6), compound (3-7) or compound (3-8). It is desirable that at least two of the second component should be a combination of compound (3-1) and compound (3-3), compound (3-1) and compound (3-5) or compound (3-1) and compound (3-6).

Desirable compound (4) is compound (4-1) to compound (4-27) according to item 11. In these compounds, it is desirable that at least one of the second additive should be compound (4-1), compound (4-2), compound (4-24), compound (4-25), compound (4-26) or compound (4-27) . It is desirable that at least two of the second additive should be a combination of compound (4-1) and compound (4-2), compound (4-1) and compound (4-18), compound (4-2) and compound (4-24), compound (4-2) and compound (4-25), compound (4-2) and compound (4-26), compound (4-25) and compound (4-26) or compound (4-18) and compound (4-24).

Sixth, additives that may be added to the composition will be explained. Such additives include an optically active compound, an antioxidant, an ultraviolet light absorber, a coloring matter, an antifoaming agent, a polymerizable compound, a polymerization initiator and a polymerization inhibitor. The optically active compound is added to the composition for the purpose of inducing the helical structure of liquid crystal molecules and giving a twist angle. Examples of such compounds include compound (5-1) to compound (5-5). A desirable ratio of the optically active compound is approximately 5% by weight or less, and a more desirable ratio is in the range of approximately 0.01% by weight to approximately 2% by weight.

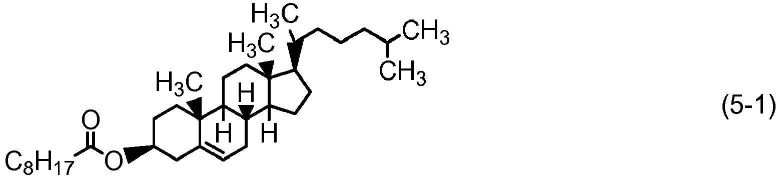

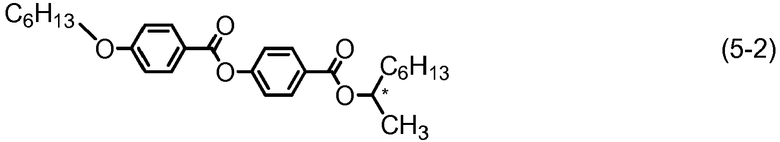

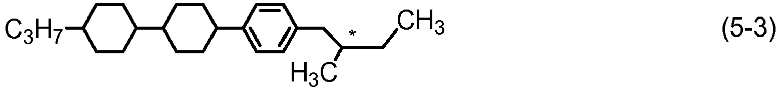

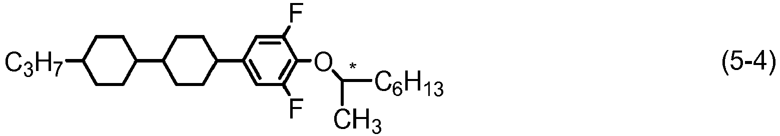

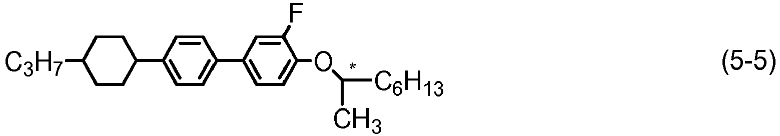

The antioxidant is added to the composition in order to prevent a decrease in specific resistance that is caused by heating under air, or to maintain a large voltage holding ratio at a temperature close to the maximum temperature as well as at room temperature, after the device has been used for a long time. A desirable example of the antioxidant is compound (6) where n is an integer from 1 to 9, for instance.

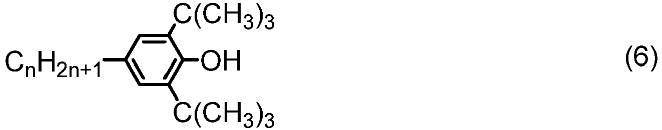

In compound (6), desirable n is 1, 3, 5, 7 or 9. More desirable n is 7. Compound (6) where n is 7 is effective in maintaining a large voltage holding ratio at a temperature close to the maximum temperature as well as at room temperature, after the device has been used for a long time, since it has a small volatility. A desirable ratio of the antioxidant is approximately 50 ppm or more for achieving its effect and is approximately 600 ppm or less for avoiding a decrease in the maximum temperature or avoiding an increase in the minimum temperature. A more desirable ratio is in the range of approximately 100 ppm to approximately 300 ppm.

Compound (1-1) to compound (1-6) are useful as an quencher. An ultraviolet light absorber may be added to the composition, together with the quencher. Desirable examples of such an ultraviolet light absorber include benzophenone derivatives, benzoate derivatives and triazole derivatives. A light stabilizer such as an amine having steric hindrance is also desirable.

A dichroic dye such as an azo dye or an anthraquinone dye is added to the composition for adjusting to a device having a guest host (GH) mode. A desirable ratio of the coloring matter is in the range of approximately 0.01% by weight to approximately 10% by weight. The antifoaming agent such as dimethyl silicone oil or methyl phenyl silicone oil is added to the composition for preventing foam formation. A desirable ratio of the antifoaming agent is approximately 1 ppm or more for achieving its effect and is approximately 1,000 ppm or less for avoiding a poor display. A more desirable ratio is in the range of approximately 1 ppm to approximately 500 ppm.

The polymerizable compound is used for adjusting to a device with a PSA (polymer sustained alignment) type. Compound (4) is suitable for this purpose. A polymerizable compound that is different from compound (4) may be added to the composition, together with compound (4). Desirable examples of such a polymerizable compound include compounds such as acrylates, methacrylates, vinyl compounds, vinyloxy compounds, propenyl ethers, epoxy compounds (oxiranes, oxetanes) and vinyl ketones. More desirable examples are acrylate derivatives or methacrylate derivatives. A desirable ratio of compound (4) is 10% by weight or more based on the total weight of the polymerizable compound. A more desirable ratio is 50% by weight or more. An especially desirable ratio is 80% by weight or more. An especially desirable ratio is also 100% by weight.

A polymerizable compound such as compound (4) is polymerized on irradiation with ultraviolet light. It may be polymerized in the presence of an initiator such as a photopolymerization initiator. Suitable conditions for polymerization, and a suitable type and amount of the initiator are known to a person skilled in the art, and are described in the literature. For example, Irgacure 651 (registered trademark; BASF), Irgacure 184 (registered trademark; BASF) or Darocur 1173 (registered trademark; BASF), each of which is a photoinitiator, is suitable for radical polymerization. A desirable ratio of the photopolymerization initiator is in the range of approximately 0.1% by weight to approximately 5% by weight based on the weight of the polymerizable compound. A more desirable ratio is in the range of approximately 1% by weight to approximately 3% by weight.

The polymerization inhibitor may be added in order to prevent the polymerization when a polymerizable compound such as compound (4) is kept in storage. The polymerizable compound is usually added to the composition without removing the polymerization inhibitor. Examples of the polymerization inhibitor include hydroquinone derivatives such as hydroquinone and methylhydroquinone, 4-t-butylcatechol, 4-methoxyphenol and phenothiazine.

Seventh, methods for synthesizing the component compounds will be explained. These compounds can be synthesized by known methods. The synthetic methods will be exemplified. Compound (1-2) is commercially available. Compound (2-1) is prepared by the method described in JP 2000-053602 A. Compound (3-1) is prepared by the method described in JP S59-176221 A (1984). Compound (3-13) is prepared by the method described in JP H02-237949 A (1990). Compound (4-18) is prepared by the method described in JP H07-101900 A (1995). An antioxidant is commercially available. A compound of formula (6) where n is 1 is available from Sigma-Aldrich Corporation. Compound (6) where n is 7, for instance, is synthesized according to the method described in U. S. Patent No. 3,660,505.

Compounds whose synthetic methods are not described here can be prepared according to the methods described in books such as "Organic Syntheses" (John Wiley & Sons, Inc.), "Organic Reactions" (John Wiley & Sons, Inc.), "Comprehensive Organic Synthesis" (Pergamon Press), and "Shin-Jikken Kagaku Kouza" (New experimental Chemistry Course, in English; Maruzen Co., Ltd., Japan). The composition is prepared according to known methods using the compounds thus obtained. For example, the component compounds are mixed and dissolved in each other by heating.

Last, the use of the composition will be explained. The composition mainly has a minimum temperature of approximately -10 °C or lower, a maximum temperature of approximately 70 °C or higher, and an optical anisotropy in the range of approximately 0.07 to approximately 0.20. A composition having an optical anisotropy in the range of approximately 0.08 to approximately 0.25 may be prepared by adjusting the ratio of the component compounds or by mixing with any other liquid crystal compound. A composition having an optical anisotropy in the range of approximately 0.10 to approximately 0.30 may be prepared by trial and error. A device including this composition has a large voltage holding ratio. This composition is suitable for an AM device. This composition is suitable especially for an AM device having a transmission type. This composition can be used as a composition having a nematic phase and as an optically active composition by adding an optically active compound.

The composition can be used for an AM device. It can also be used for a PM device. The composition can also be used for the AM device and the PM device having a mode such as PC, TN, STN, ECB, OCB, IPS, FFS, VA and FPA. It is especially desirable to use the composition for the AM device having a mode of TN, OCB, IPS or FFS. In the AM device having the IPS or FFS mode, the orientation of liquid crystal molecules may be parallel or perpendicular to a glass substrate, when no voltage is applied. These devices may be of a reflection type, a transmission type or a semi-transmission type. It is desirable to use the composition for a device having the transmission type. The composition can be used for an amorphous silicon-TFT device or a polycrystal silicon-TFT device. The composition is also usable for an NCAP (nematic curvilinear aligned phase) device prepared by microcapsulating the composition, and for a PD (polymer dispersed) device in which a three-dimensional network-polymer is formed in the composition.

### EXAMPLES

The invention will be explained in more detail by way of examples. The invention is not limited to the examples. The invention includes a mixture of the composition in Example 1 and the composition in Example 2. The invention also includes a mixture prepared by mixing at least two compositions in Examples. Compounds prepared herein were identified by methods such as NMR analysis. The characteristics of the compounds, compositions and devices were measured by the methods described below.

**NMR Analysis:** A model DRX-500 apparatus made by Bruker BioSpin Corporation was used for measurement. In the measurement of ¹H-NMR, a sample was dissolved in a deuterated solvent such as CDCl₃, and the measurement was carried out under the conditions of room temperature, 500 MHz and the accumulation of 16 scans. Tetramethylsilane was used as an internal standard. In the measurement of ¹⁹F-NMR, CFCl₃ was used as the internal standard, and 24 scans were accumulated. In the explanation of the nuclear magnetic resonance spectra, the symbols s, d, t, q, quin, sex, m and br stand for a singlet, a doublet, a triplet, a quartet, a quintet, a sextet, a multiplet and line-broadening, respectively.

**Gas Chromatographic Analysis:** A gas chromatograph Model GC-14B made by Shimadzu Corporation was used for measurement. The carrier gas was helium (2 milliliters per minute). The sample injector and the detector (FID) were set to 280 °C and 300 °C, respectively. A capillary column DB-1 (length 30 meters, bore 0.32 millimeter, film thickness 0.25 micrometers, dimethylpolysiloxane as the stationary phase, non-polar) made by Agilent Technologies, Inc. was used for the separation of component compounds. After the column had been kept at 200 °C for 2 minutes, it was further heated to 280 °C at the rate of 5 °C per minute. A sample was dissolved in acetone (0.1% by weight), and 1 microliter of the solution was injected into the sample injector. A recorder used was Model C-R5A Chromatopac Integrator made by Shimadzu Corporation or its equivalent. The resulting gas chromatogram showed the retention time of peaks and the peak areas corresponding to the component compounds.

Solvents for diluting the sample may also be chloroform, hexane and so forth. The following capillary columns may also be used in order to separate the component compounds: HP-1 made by Agilent Technologies Inc. (length 30 meters, bore 0.32 millimeter, film thickness 0.25 micrometers), Rtx-1 made by Restek Corporation (length 30 meters, bore 0.32 millimeter, film thickness 0.25 micrometers), and BP-1 made by SGE International Pty. Ltd. (length 30 meters, bore 0.32 millimeter, film thickness 0.25 micrometers). A capillary column CBP1-M50-025 (length 50 meters, bore 0.25 millimeter, film thickness 0.25 micrometers) made by Shimadzu Corporation may also be used for the purpose of avoiding an overlap of peaks of the compounds.

The ratio of the liquid crystal compounds included in the composition may be calculated according to the following method. A mixture of the liquid crystal compounds is analyzed by gas chromatography (FID) . The ratio of peak areas in the gas chromatogram corresponds to the ratio of the liquid crystal compounds. When the capillary columns described above are used, the correction coefficient of respective liquid crystal compounds may be regarded as 1 (one). Accordingly, the ratio (percentage by weight) of the liquid crystal compounds can be calculated from the ratio of peak areas.

**Samples for measurement:** A composition itself was used as a sample when the characteristics of the composition or the device were measured. When the characteristics of a compound were measured, a sample for measurement was prepared by mixing this compound (15% by weight) with mother liquid crystals (85% by weight). The characteristic values of the compound were calculated from the values obtained from measurements by an extrapolation method: (Extrapolated value) = (Measured value of sample) - 0.85 × (Measured value of mother liquid crystals) / 0.15. When a smectic phase (or crystals) deposited at 25 °C at this ratio, the ratio of the compound to the mother liquid crystals was changed in the order of (10% by weight: 90% by weight), (5% by weight: 95% by weight) and (1% by weight: 99% by weight). The values of the maximum temperature, the optical anisotropy, the viscosity and the dielectric anisotropy regarding the compound were obtained by means of this extrapolation method.

The mother liquid crystals described below were used. The ratio of the component compounds were expressed as a percentage by weight.

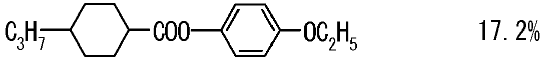

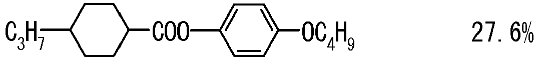

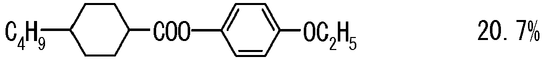

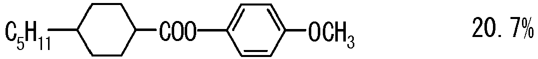

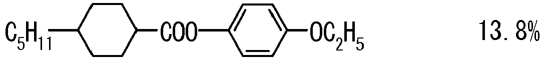

**Measurement methods:** The characteristics were measured according to the following methods. Most are methods described in the JEITA standards (JEITA-ED-2521B) which was deliberated and established by Japan Electronics and Information Technology Industries Association (abbreviated to JEITA), or the modified methods. No thin film transistors (TFT) were attached to a TN device used for measurement.
**(1) Maximum Temperature of a Nematic Phase (NI; °C)** : A sample was placed on a hot plate in a melting point apparatus equipped with a polarizing microscope and was heated at the rate of 1 °C per minute. The temperature was measured when a part of the sample began to change from a nematic phase to an isotropic liquid. A higher limit of the temperature range of a nematic phase may be abbreviated to the "maximum temperature."
**(2) Minimum Temperature of a Nematic Phase (Tc; °C) :** A sample having a nematic phase was placed in glass vials and then kept in freezers at temperatures of 0 °C, -10 °C, -20 °C, -30 °C and -40 °C for 10 days, and then the liquid crystal phases were observed. For example, when the sample maintained the nematic phase at -20 °C and changed to crystals or a smectic phase at -30 °C, Tc was expressed as < -20 °C. A lower limit of the temperature range of a nematic phase may be abbreviated to "the minimum temperature."
**(3) Viscosity (bulk viscosity; η; measured at 20 °C; mPa•s)** : An E-type viscometer made by Tokyo Keiki Inc. was used for measurement.
**(4) Viscosity (rotational viscosity; γ1; measured at 25 °C; mPa·s) :** The measurement was carried out in accordance with the method described in M. Imai, et al., Molecular Crystals and Liquid Crystals, Vol. 259, p. 37 (1995) . A sample was poured into a VA device in which the distance between the two glass substrates (cell gap) was 20 micrometers. A voltage in the range of 39 volts to 50 volts was applied stepwise with an increment of 1 volt to this device. After a period of 0.2 second with no voltage, a voltage was applied repeatedly under the conditions of only one rectangular wave (rectangular pulse; 0.2 second) and no voltage (2 seconds) . The peak current and the peak time of the transient current generated by the applied voltage were measured. The value of rotational viscosity was obtained from these measured values and the calculating equation (8) on page 40 of the paper presented by M. Imai, et al. The dielectric anisotropy necessary for the present calculation was measured in accordance with measurement (6) described below.
**(5) Optical anisotropy (refractive index anisotropy; Δn; measured at 25 °C):** The measurement was carried out using an Abbe refractometer with a polarizing plate attached to the ocular, using light at a wavelength of 589 nanometers. The surface of the main prism was rubbed in one direction, and then a sample was placed on the main prism. The refractive index (n∥) was measured when the direction of the polarized light was parallel to that of rubbing. The refractive index (n⊥) was measured when the direction of polarized light was perpendicular to that of rubbing. The value of the optical anisotropy (Δn) was calculated from the equation: Δn = n∥ - n⊥.
**(6) Dielectric anisotropy (Δε; measured at 25 °C):** The value of dielectric anisotropy was calculated from the equation: Δε= ε∥ - ε⊥. The dielectric constants (ε∥ and ε⊥) were measured as follows.
   1) Measurement of a dielectric constant (ε∥) : A solution of octadecyltriethoxysilane (0.16 mL) in ethanol (20 mL) was applied to thoroughly cleaned glass substrates. The glass substrates were rotated with a spinner, and then heated at 150 °C for one hour. A sample was poured into a VA device in which the distance between the two glass substrates (cell gap) was 4 micrometers, and then this device was sealed with a UV-curable adhesive. Sine waves (0.5 V, 1 kHz) were applied to this device, and the dielectric constant (ε∥) in the major axis direction of liquid crystal molecules was measured after 2 seconds.
   2) Measurement of a dielectric constant (ε⊥): A polyimide solution was applied to thoroughly cleaned glass substrates. The glass substrates were calcined, and then the resulting alignment film was subjected to rubbing. A sample was poured into a TN device in which the distance between the two glass substrates (cell gap) was 9 micrometers and the twist angle was 80 degrees. Sine waves (0.5 V, 1 kHz) were applied to this device, and the dielectric constant (ε⊥) in the minor axis direction of liquid crystal molecules was measured after 2 seconds.
**(7) Threshold voltage (Vth; measured at 25 °C; V) :** An LCD evaluation system Model LCD-5100 made by Otsuka Electronics Co., Ltd. was used for measurement. The light source was a halogen lamp. A sample was poured into a VA device having a normally black mode, in which the distance between the two glass substrates (cell gap) was 4 micrometers and the rubbing direction was antiparallel, and then this device was sealed with a UV-curable adhesive. The voltage to be applied to this device (60 Hz, rectangular waves) was stepwise increased in 0.02-volt increments from 0 volts up to 20 volts. The device was vertically irradiated with light simultaneously, and the amount of light passing through the device was measured. A voltage-transmittance curve was prepared, in which the maximum amount of light corresponded to 100% transmittance and the minimum amount of light corresponded to 0% transmittance. The threshold voltage was expressed as voltage at 10% transmittance.
**(8) Voltage Holding Ratio (VHR-9; measured at 25 °C; %) :** A TN device used for measurement had a polyimide-alignment film, and the distance between the two glass substrates (cell gap) was 5 micrometers. A sample was poured into the device, and then this device was sealed with a UV-curable adhesive. A pulse voltage (60 microseconds at 1 V) was applied to the TN device, and the device was charged. A decreasing voltage was measured for 166.7 milliseconds with a high-speed voltmeter, and area A between the voltage curve and the horizontal axis in a unit cycle was obtained. Area B was an area without the decrease. The voltage holding ratio was expressed as a percentage of area A to area B.
**(9) Voltage Holding Ratio (VHR-10; measured at 60 °C; %)** : The voltage holding ratio was measured by the method described above, except that it was measured at 60 °C instead of 25 °C. The resulting values were represented by the symbol VHR-10.
**(10) Voltage Holding Ratio (VHR-11; measured at 60 °C; %):** The stability to ultraviolet light was evaluated by measuring a voltage holding ratio after irradiation with ultraviolet light. A TN device used for measurement had a polyimide-alignment film and the cell gap was 5 micrometers. A sample was poured into this device, and then the device was irradiated with ultraviolet light of 5 mW/cm² for 167 minutes . The light source was a black light F40T10/BL (peak wavelength, 369 nm) made by Eye Graphics Co., Ltd, and the distance between the device and the light source was 5 millimeters. In the measurement of VHR-11, a decreasing voltage was measured for 166.7 milliseconds. A composition having a large VHR-11 has a large stability to ultraviolet light.
**(11) Voltage Holding Ratio (VHR-12; measured at 25 °C; %)** : A TN device into which a sample was poured was heated in a constant-temperature bath at 120 °C for 20 hours, and then the stability to heat was evaluated by measuring the voltage holding ratio. In the measurement of VHR-12, a decreasing voltage was measured for 166.7 milliseconds. A composition having a large VHR-12 has a high stability to heat.
**(12) Response Time (τ; measured at 25 °C; millisecond):** An LCD evaluation system Model LCD-5100 made by Otsuka Electronics Co., Ltd. was used for measurement. The light source was a halogen lamp. The low-pass filter was set at 5 kHz. A sample was poured into a VA device having a normally black mode, in which the distance between the two glass substrates (cell gap) was 4 micrometers, and the rubbing direction was antiparallel. This device was sealed with a UV-curable adhesive. Rectangular waves (60 Hz, 10 V, 0.5 second) were applied to this device. The device was vertically irradiated with light simultaneously, and the amount of light passing through the device was measured. The transmittance was regarded as 100% when the amount of light reached a maximum. The transmittance was regarded as 0% when the amount of light reached a minimum. The response time was expressed as the period of time required for the change from 90% to 10% transmittance (fall time: millisecond).
**(13) Specific Resistance (ρ; measured at 25 °C; Ω cm):** A sample of 1.0 milliliter was poured into a vessel equipped with electrodes. A DC voltage (10 V) was applied to the vessel, and the DC current was measured after 10 seconds. The specific resistance was calculated from the following equation: (specific resistance) = [(voltage) × (electric capacity of vessel)] / [(DC current) × (dielectric constant in vacuum)].

The compounds described in Examples were expressed in terms of symbols according to the definition in Table 3 described below. In Table 3, the configuration of 1,4-cyclohexylene is trans. The parenthesized number next to a symbolized compound in Example corresponds to the number of the compound. The symbol (-) means any other liquid crystal compound. The ratio (percentage) of a liquid crystal compound means the percentages by weight (% by weight) based on the weight of the liquid crystal composition. Last, the values of characteristics of the composition are summarized.

**Table 3. Method of Description of Compounds using Symbols**

| R-(A₁)-Z₁-·····-Zₙ-(Aₙ)-R' | | | |
|---|---|---|---|
| 1) Left-terminal Group R- | Symbol | 4) Ring -Aₙ- | Symbol |
| F-CₙH₂ₙ- | Fn- | 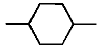 | H |
| CₙH₂ₙ₊₁- | n- | | |
| CₙH₂ₙ₊₁O- | nO- | 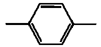 | B |
| CₘH₂ₘ₊₁OCₙH₂ₙ- | mOn- | | |
| CH₂=CH- | V- | 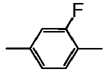 | B(F) |
| CₙH₂ₙ₊₁-CH=CH- | nV- | | |
| CH₂=CH-CₙH₂ₙ- | Vn- | | |
| CₘH₂ₘ₊₁-CH=CH-CₙH₂ₙ- | mVn- | 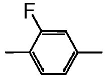 | B(2F) |
| CF₂=CH- | VFF- | | |
| CF₂=CH-CₙH₂ₙ- | VFFn- | | |
| CH₂=CH-COO- | AC- | 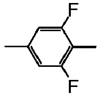 | B(F,F) |
| CH₂=C(CH₃)-COO- | MAC- | | |
| 2) Right-terminal Group -R' | Symbol | | |
| -CₙH₂ₙ₊₁ | -n | 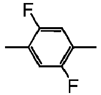 | B(2F,5F) |
| -OCₙH₂ₙ₊₁ | -On | | |
| -CH=CH₂ | -V | | |
| -CH=CH-CₙH₂ₙ₊₁ | -Vn | | |
| -CₙH₂ₙ-CH=CH₂ | -nV | 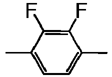 | B(2F,3F) |
| -CₘH₂ₘ-CH=CH-CₙH₂ₙ₊₁ | -mVn | | |
| -CH=CF₂ | -VFF | 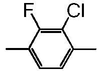 | B(2F,3CL) |
| -OCO-CH=CH₂ | -AC | | |
| -OCO-C(CH₃)=CH₂ | -MAC | | |
| 3) Bonding Group -Zₙ- | Symbol | | |
| -CₙH₂ₙ- | n | 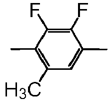 | B(2F,3F,6Me) |
| -COO- | E | | |
| -CH=CH- | V | | |
| -CH=CHO- | VO | 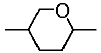 | dh |
| -OCH=CH- | OV | | |
| -CH₂O- | 1O | | |
| -OCH₂- | O1 | 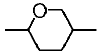 | Dh |
| 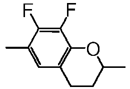 | | 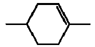 | ch |

| 5) Examples of Description | | | |
|---|---|---|---|
| Example 1. 2-BB(F)B-3 | | Example 2. 3-HHB(2F,3F)-O2 | |
| 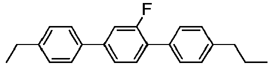 | | 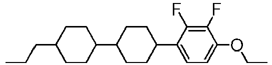 | |

| Example 3. V-HHB-1 | | Example 4. 3-HDhB(2F,3F)-O2 | |
|---|---|---|---|
| 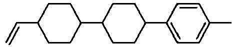 | | 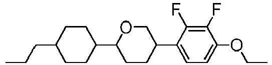 | |

### Example 1

| | | |
|---|---|---|
| 2-H1OB(2F,3F)-O2 | (2-4) | 3% |
| 3-H1OB(2F,3F)-O2 | (2-4) | 10% |
| 1V2-BB(2F,3F)-O2 | (2-5) | 10% |
| V-HHB(2F,3F)-O1 | (2-7) | 12% |
| V-HHB(2F,3F)-O2 | (2-7) | 12% |
| 3-HH1OB(2F,3F)-O2 | (2-10) | 6% |
| 2-BB(2F,3F)B-3 | (2-11) | 6% |
| 3-HH-V | (3-1) | 25% |
| 3-HH-V1 | (3-1) | 6% |
| 4-HH-V1 | (3-1) | 3% |
| V-HHB-1 | (3-5) | 3% |
| V2-HHB-1 | (3-5) | 4% |

The preceding composition having negative dielectric anisotropy was prepared, and the characteristics were measured. NI= 80.1 °C; Tc< -20 °C; Δn= 0.103; Δε= -3.9; Vth= 2.09 V; η= 20.7 mPa•s; VHR-11= 36.3%. Compound (1-1) was added to the composition in the ratio of 0.05% by weight, and VHR-11 was measured. VHR-11= 65.2%.

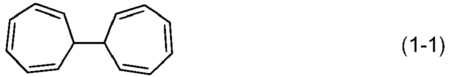

### Example 2

| | | |
|---|---|---|
| 3-H1OB(2F,3F)-O2 | (2-4) | 8 % |
| V2-BB (2F,3F)-O1 | (2-5) | 4% |
| V2-BB(2F,3F)-O2 | (2-5) | 9 % |
| 1V2-BB(2F,3F)-04 | (2-5) | 6% |
| V-HHB(2F,3F)-O2 | (2-7) | 10% |
| V-HHB(2F,3F)-O4 | (2-7) | 3% |
| 1V2-HHB(2F,3F)-O2 | (2-7) | 4% |
| 3-HH1OB(2F,3F)-O2 | (2-10) | 12% |
| 3-HH-V | (3-1) | 26% |
| 1-HH-2V1 | (3-1) | 3% |
| 3-HH-2V1 | (3-1) | 3% |
| 5-HB-O2 | (3-2) | 3% |
| 3-HHB-O1 | (3-5) | 5% |
| V-HHB-1 | (3-5) | 4% |

The preceding composition having negative dielectric anisotropy was prepared, and the characteristics were measured. NI= 77.0 °C; Tc< -20 °C; Δn= 0.099; Δε= -3.4; Vth= 2.22 V; η= 18.6 mPa•s; VHR-11= 34.7%. Compound (1-1) was added to the composition in the ratio of 0.3% by weight, and VHR-11 was measured. VHR-11= 62.4%.

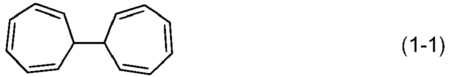

### Example 3

| | | |
|---|---|---|
| 3-H1OB(2F,3F)-O2 | (2-4) | 8 % |
| 3-BB(2F,3F)-O2 | (2-5) | 8 % |
| 2O-BB(2F,3F)-O2 | (2-5) | 5% |
| 2-HH1OB(2F,3F)-O2 | (2-10) | 8 % |
| 3-HH1OB(2F,3F)-O2 | (2-10) | 7% |
| 2-BB(2F,3F)B-3 | (2-11) | 8 % |
| 3-HDhB(2F,3F)-O2 | (2-13) | 10% |
| 3-HH-V | (3-1) | 2 4 % |
| 3-HH-V1 | (3-1) | 10% |
| V2-HHB-1 | (3-5) | 9 % |
| 101-HBBH-4 | (-) | 3 % |

The preceding composition having negative dielectric anisotropy was prepared, and the characteristics were measured. NI= 83.7 °C; Tc< -20 °C; Δn= 0.107; Δε= -3.7; Vth= 2.21 V; η= 22.9 mPa•s; VHR-11= 37.9%. Compound (1-2) was added to the composition in the ratio of 0.1% by weight, and VHR-11 was measured. VHR-11= 70.5%.

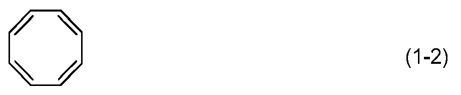

### Example 4

| | | |
|---|---|---|
| 3-H2B(2F,3F)-O2 | (2-3) | 15% |
| 5-H2B(2F,3F)-O2 | (2-3) | 12% |
| 3-HHB(2F,3F)-O2 | (2-7) | 8% |
| 5-HHB(2F,3F)-O2 | (2-7) | 6% |
| 2-HHB(2F,3F)-1 | (2-7) | 5% |
| 3-HBB(2F,3F)-O2 | (2-15) | 10% |
| 4-HBB(2F,3F)-O2 | (2-15) | 6% |
| 1V2-HBB(2F,3F)-O2 | (2-15) | 4% |
| 2-HH-3 | (3-1) | 20% |
| 3-HH-4 | (3-1) | 10% |
| V2-BB(F)B-1 | (3-8) | 4% |

The preceding composition having negative dielectric anisotropy was prepared, and the characteristics were measured. NI= 80.0 °C; Tc< -20 °C; Δn= 0.096; Δε= -3.4; Vth= 2.19 V; η= 19.0 mPa•s. Compound (1-3) was added to the composition in the ratio of 0.1% by weight, and VHR-11 was measured. VHR-11= 89.7%.

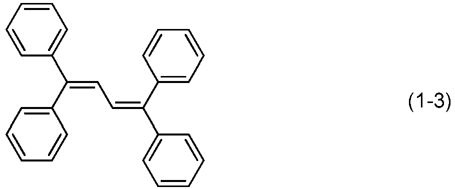

### Example 5

| | | |
|---|---|---|
| V2-BB(2F,3F)-O2 | (2-5) | 12% |
| 1V2-BB(2F,3F)-02 | (2-5) | 5% |
| 1V2-BB(2F,3F)-04 | (2-5) | 3% |
| V-HHB(2F,3F)-O1 | (2-7) | 5% |
| V-HHB(2F,3F)-O2 | (2-7) | 12% |
| V-HHB(2F,3F)-O4 | (2-7) | 5% |
| 3-HDhB(2F,3F)-O2 | (2-13) | 5% |
| 3-dhBB(2F,3F)-O2 | (2-16) | 4% |
| 3-HH-V | (3-1) | 32% |
| 1-BB-3 | (3-3) | 5% |
| 3-HHEH-3 | (3-4) | 3% |
| V-HHB-1 | (3-5) | 3% |
| 1-BB(F)B-2V | (3-8) | 3% |
| 3-HHEBH-4 | (3-9) | 3% |

The preceding composition having negative dielectric anisotropy was prepared, and the characteristics were measured. NI= 78.6 °C; Tc< -20 °C; Δn= 0.107; Δε= -2.7; Vth= 2.36 V; η= 18.8 mPa•s. Compound (1-2) was added to the composition in the ratio of 0.05% by weight, and VHR-11 was measured. VHR-11= 88.4%.

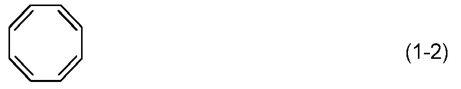

### Example 6

| | | |
|---|---|---|
| V2-BB(2F,3F)-O2 | (2-5) | 12% |
| 1V2-BB(2F,3F)-O2 | (2-5) | 6% |
| 1V2-BB(2F,3F)-O4 | (2-5) | 3% |
| V-HHB(2F,3F)-O1 | (2-7) | 6% |
| V-HHB(2F,3F)-O2 | (2-7) | 7% |
| V-HHB(2F,3F)-O4 | (2-7) | 5% |
| 1V2-HHB(2F,3F)-O4 | (2-7) | 5% |
| 3-DhH1OB(2F,3F)-O2 | (2-14) | 5% |
| 3-dhBB(2F,3F)-O2 | (2-16) | 5% |
| 3-HH-V | (3-1) | 26% |
| 3-HH-VFF | (3-1) | 3% |
| V2-HB-1 | (3-2) | 6% |
| V-HHB-1 | (3-5) | 5% |
| 2-BB(F)B-5 | (3-8) | 3% |
| 5-HBB(F)B-3 | (3-13) | 3% |

The preceding composition having negative dielectric anisotropy was prepared, and the characteristics were measured. NI= 79.0 °C; Tc< -20 °C; Δn= 0.112; Δε= -2.9; Vth= 2.35 V; η= 19.8 mPa•s. Compound (1-1) was added to the composition in the ratio of 0.1% by weight, and VHR-11 was measured. VHR-11= 81.1%.

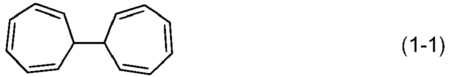

### Example 7

| | | |
|---|---|---|
| 3-H1OB(2F,3F)-O2 | (2-4) | 10% |
| 1V2-BB(2F,3F)-O2 | (2-5) | 10% |
| V-HHB(2F,3F)-O1 | (2-7) | 11% |
| V-HHB(2F,3F)-O2 | (2-7) | 12% |
| 3-HH1OB(2F,3F)-O2 | (2-10) | 9 % |
| 2-BB(2F,3F)B-3 | (2-11) | 7% |
| 3-HH-V | (3-1) | 26% |
| 3-HH-V1 | (3-1) | 6% |
| 1-HH-2V1 | (3-1) | 3% |
| 3-HHB-3 | (3-5) | 3% |
| V-HHB-1 | (3-5) | 3% |

The preceding composition having negative dielectric anisotropy was prepared, and the characteristics were measured. NI= 81.6 °C; Tc< -20 °C; Δn= 0.103; Δε= -3.7; Vth= 2.15 V; η= 20.9 mPa•s. Compound (1-1) was added to the composition in the ratio of 0.06% by weight, and VHR-11 was measured. VHR-11= 66.3%.

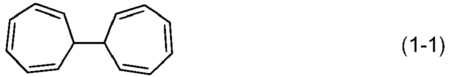

### Example 8

| | | |
|---|---|---|
| 3-HB(2F,3F)-O2 | (2-1) | 8% |
| 3-H1OB(2F,3F)-O2 | (2-4) | 8 % |
| 3-BB(2F,3F)-O2 | (2-5) | 5% |
| 2-HH1OB(2F,3F)-O2 | (2-10) | 8% |
| 3-HH1OB(2F,3F)-O2 | (2-10) | 7% |
| 3-HDhB(2F,3F)-O2 | (2-13) | 10% |
| 3-HH-V | (3-1) | 25% |
| 3-HH-V1 | (3-1) | 10% |
| V2-HHB-1 | (3-5) | 11% |
| 2-BB(F)B-3 | (3-8) | 8 % |

The preceding composition having negative dielectric anisotropy was prepared, and the characteristics were measured. NI= 79.4 °C; Tc< -20 °C; Δn= 0.100; Δε= -3.5; Vth= 2.20 V; η= 19.5 mPa•s. Compound (1-2) was added to the composition in the ratio of 0.15% by weight, and VHR-11 was measured. VHR-11= 65.8%.

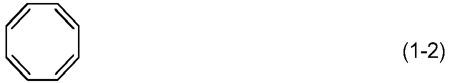

### Example 9

| | | |
|---|---|---|
| V2-HB(2F,3F)-O2 | (2-1) | 5 % |
| 3-H2B(2F,3F)-O2 | (2-3) | 9% |
| 3-HHB(2F,3F)-O2 | (2-7) | 12% |
| 2-HH1OB(2F,3F)-O2 | (2-10) | 7% |
| 3-HH1OB(2F,3F)-O2 | (2-10) | 12% |
| 3-HDhB(2F,3F)-O2 | (2-13) | 3% |
| 2-HH-3 | (3-1) | 27% |
| 1-BB-3 | (3-3) | 13% |
| 3-HHB-1 | (3-5) | 3% |
| 3-B(F)BB-2 | (3-7) | 3 % |
| 3-HB(F)HH-5 | (3-10) | 3% |
| 3-HB(F)BH-3 | (3-12) | 3 % |

The preceding composition having negative dielectric anisotropy was prepared, and the characteristics were measured. NI= 78.9 °C; Tc< -20 °C; Δn= 0.098; Δε= -2.9; Vth= 2.34 V; η= 18.2 mPa•s. Compound (1-1) was added to the composition in the ratio of 0.05% by weight, and VHR-11 was measured. VHR-11= 80.3%.

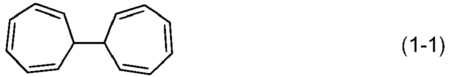

### Example 10

| | | |
|---|---|---|
| 5-H2B(2F,3F)-O2 | (2-3) | 9 % |
| 5-BB(2F,3F)-O4 | (2-5) | 5% |
| 5-HHB(2F,3F)-O2 | (2-7) | 3% |
| V-HHB(2F,3F)-O2 | (2-7) | 6% |
| 3-HH2B(2F,3F)-O2 | (2-9) | 3% |
| 3-HH1OB(2F,3F)-O2 | (2-10) | 13% |
| 2-BB(2F,3F)B-3 | (2-11) | 3% |
| 2-HHB(2F,3CL)-O2 | (2-18) | 3% |
| 4-HHB(2F,3CL)-O2 | (2-18) | 3% |
| 2-HH-3 | (3-1) | 22% |
| 3-HH-V | (3-1) | 5% |
| V2-BB-1 | (3-3) | 3% |
| 1-BB-3 | (3-3) | 13% |
| 3-HB(F)HH-5 | (3-10) | 3% |
| 5-HBBH-3 | (3-11) | 3% |
| 3-HB(F)BH-3 | (3-12) | 3% |

The preceding composition having negative dielectric anisotropy was prepared, and the characteristics were measured. NI= 78.9 °C; Tc< -20 °C; Δn= 0.103; Δε= -2.6; Vth= 2.49 V; η= 17.6 mPa•s. Compound (1-1) was added to the composition in the ratio of 0.1% by weight, and VHR-11 was measured. VHR-11= 79.6%.

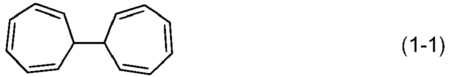

### Example 11

| | | |
|---|---|---|
| 3-H2B(2F,3F)-O2 | (2-3) | 20% |
| 5-H2B(2F,3F)-O2 | (2-3) | 12% |
| 3-HHB(2F,3F)-O2 | (2-7) | 8% |
| 5-HHB(2F,3F)-O2 | (2-7) | 6% |
| 3-HDhB(2F,3F)-O2 | (2-13) | 5% |
| 3-HBB(2F,3F)-O2 | (2-15) | 10% |
| 4-HBB(2F,3F)-O2 | (2-15) | 6% |
| 2-HH-3 | (3-1) | 16% |
| 3-HH-4 | (3-1) | 13% |
| 1V-HBB-2 | (3-6) | 4% |

The preceding composition having negative dielectric anisotropy was prepared, and the characteristics were measured. NI= 76.2 °C; Tc< -20 °C; Δn= 0.089; Δε= -3.6; Vth= 2.12 V; η= 19.8 mPa•s. Compound (1-3) was added to the composition in the ratio of 0.05% by weight, and VHR-11 was measured. VHR-11= 86.6%.

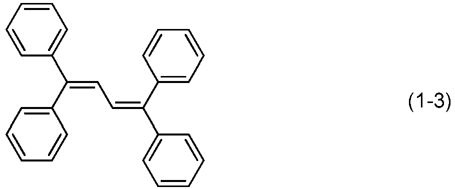

### Example 12

| | | |
|---|---|---|
| 3-HB(2F,3F)-O2 | (2-1) | 5 % |
| V-HB(2F,3F)-O4 | (2-1) | 4% |
| 5-BB(2F,3F)-O2 | (2-5) | 6% |
| 3-B(2F,3F)B(2F,3F)-O2 | (2-6) | 3 % |
| V-HHB(2F,3F)-O2 | (2-7) | 10% |
| 3-HH1OB(2F,3F)-O2 | (2-10) | 10% |
| 2-BB(2F,3F)B-3 | (2-11) | 5 % |
| 4-HBB(2F,3F)-O2 | (2-15) | 5% |
| V-HBB(2F,3F)-O2 | (2-15) | 7% |
| 3-HBB(2F,3CL)-O2 | (2-19) | 3 % |
| 3-HH-O1 | (3-1) | 3 % |
| 3-HH-V | (3-1) | 26% |
| 3-HB-O2 | (3-2) | 3 % |
| V-HHB-1 | (3-5) | 7% |
| 3-BB(F)B-5 | (3-8) | 3 % |

The preceding composition having negative dielectric anisotropy was prepared, and the characteristics were measured. NI= 80.6 °C; Tc< -20 °C; Δn= 0.114; Δε= -3.2; Vth= 2.27 V; η= 24.0 mPa•s. Compound (1-1) was added to the composition in the ratio of 0.07% by weight, and VHR-11 was measured. VHR-11= 83.2%.

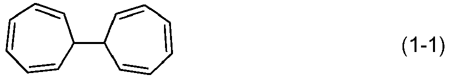

### Example 13

| | | |
|---|---|---|
| 3-chB(2F,3F)-O2 | (2-2) | 6% |
| 3-BB(2F,3F)-O4 | (2-5) | 6% |
| V2-BB(2F,3F)-O2 | (2-5) | 6% |
| 3-HHB(2F,3F)-O2 | (2-7) | 5% |
| V-HHB(2F,3F)-O1 | (2-7) | 6% |
| V-HHB(2F,3F)-O2 | (2-7) | 9 % |
| 2-HchB(2F,3F)-O2 | (2-8) | 3% |
| 3-DhHB(2F,3F)-O2 | (2-12) | 5% |
| 3-HEB(2F,3F)B(2F,3F)-O2 | (2-17) | 3% |
| 3-H1OCro(7F,8F)-5 | (2-20) | 3% |
| 3-HH1OCro(7F,8F)-5 | (2-21) | 3% |
| 3-HH-V | (3-1) | 23% |
| 4-HH-V | (3-1) | 3% |
| 5-HH-V | (3-1) | 6% |
| 7-HB-1 | (3-2) | 3% |
| V-HHB-1 | (3-5) | 4% |
| V-HBB-2 | (3-6) | 3% |
| 2-BB(F)B-3 | (3-8) | 3% |

The preceding composition having negative dielectric anisotropy was prepared, and the characteristics were measured. NI= 70.9 °C; Tc< -20 °C; Δn= 0.092; Δε= -3.2; Vth= 2.16 V; η= 22.9 mPa•s. Compound (1-2) was added to the composition in the ratio of 0.1% by weight, and VHR-11 was measured. VHR-11= 85.1%.

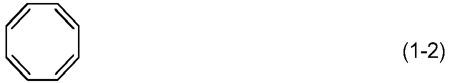

### Example 14

| | | |
|---|---|---|
| 5-H2B(2F,3F)-O2 | (2-3) | 9 % |
| 5-BB(2F,3F)-O4 | (2-5) | 5% |
| 5-HHB(2F,3F)-O2 | (2-7) | 3% |
| V-HHB(2F,3F)-O2 | (2-7) | 6% |
| 3-HH2B(2F,3F)-O2 | (2-9) | 3% |
| 3-HH1OB(2F,3F)-O2 | (2-10) | 13% |
| 2-BB(2F,3F)B-3 | (2-11) | 3% |
| 2-HHB(2F,3CL)-O2 | (2-18) | 3% |
| 4-HHB(2F,3CL)-O2 | (2-18) | 3% |
| 2-HH-3 | (3-1) | 22% |
| 3-HH-V | (3-1) | 5% |
| V2-BB-1 | (3-3) | 3% |
| 1-BB-5 | (3-3) | 13% |
| 3-HBB-2 | (3-6) | 3 % |
| 3-HB(F)HH-5 | (3-10) | 3 % |
| 3-HB(F)BH-3 | (3-12) | 3 % |

The preceding composition having negative dielectric anisotropy was prepared, and the characteristics were measured. NI= 76.1 °C; Tc< -20 °C; Δn= 0.103; Δε= -2.6; Vth= 2.47 V; η= 16.8 mPa•s. Compound (1-2) was added to the composition in the ratio of 0.2% by weight, and VHR-11 was measured. VHR-11= 84.9%.

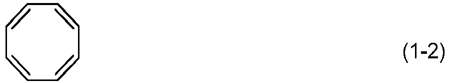

### Example 15

| | | |
|---|---|---|
| 3-BB(2F,3F)-O4 | (2-5) | 6% |
| V2-BB (2F,3F)-O2 | (2-5) | 12% |
| 3-HHB(2F,3F)-O2 | (2-7) | 5% |
| V-HHB(2F,3F)-O1 | (2-7) | 6% |
| V2-HHB(2F,3F)-O2 | (2-7) | 12% |
| 3-DhHB(2F,3F)-O2 | (2-12) | 5% |
| 3-HEB(2F,3F)B(2F,3F)-O2 | (2-17) | 3% |
| 3-H1OCro(7F,8F)-5 | (2-20) | 3% |
| 3-HH1OCro(7F,8F)-5 | (2-21) | 3% |
| 3-HH-V | (3-1) | 23% |
| 4-HH-V | (3-1) | 3% |
| 5-HH-V | (3-1) | 6% |
| 7-HB-1 | (3-2) | 3% |
| V-HHB-1 | (3-5) | 4% |
| V-HBB-2 | (3-6) | 3% |
| 2-BB(F)B-3 | (3-8) | 3% |

The preceding composition having negative dielectric anisotropy was prepared, and the characteristics were measured. NI= 76.1 °C; Tc< -20 °C; Δn= 0.099; Δε= -3.0; Vth= 2.25 V; η= 22.7 mPa•s. Compound (1-1) was added to the composition in the ratio of 0.03% by weight, and VHR-11 was measured. VHR-11= 82.2%.

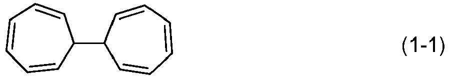

### Example 16

| | | |
|---|---|---|
| 3-H2B(2F,3F)-O2 | (2-3) | 20% |
| 5-H2B(2F,3F)-O2 | (2-3) | 12% |
| 3-HHB(2F,3F)-O2 | (2-7) | 8 % |
| 5-HHB(2F,3F)-O2 | (2-7) | 6% |
| 3-HDhB(2F,3F)-O2 | (2-13) | 5% |
| 3-HBB(2F,3F)-O2 | (2-15) | 10% |
| 4-HBB(2F,3F)-O2 | (2-15) | 6% |
| 2-HH-3 | (3-1) | 16% |
| 3-HH-4 | (3-1) | 13% |
| 1V-HBB-2 | (3-6) | 4% |

The preceding composition having negative dielectric anisotropy was prepared, and the characteristics were measured. NI= 76.2 °C; Tc< -20 °C; Δn= 0.089; Δε= -3.6; Vth= 2.12 V; η= 19.8 mPa•s. Compound (1-4) was added to the composition in the ratio of 0.03% by weight, and VHR-11 was measured. VHR-11= 87.2%.

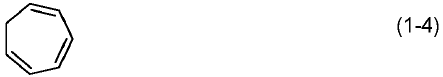

### Example 17

| | | |
|---|---|---|
| 3-BB(2F,3F)-O4 | (2-5) | 6% |
| V2-BB(2F,3F)-O2 | (2-5) | 12% |
| 3-HHB(2F,3F)-O2 | (2-7) | 8 % |
| V-HHB(2F,3F)-O1 | (2-7) | 6% |
| V2-HHB (2F,3F)-O2 | (2-7) | 12% |
| 3-DhHB(2F,3F)-O2 | (2-12) | 5% |
| 3-HEB(2F,3F)B(2F,3F)-O2 | (2-17) | 3% |
| 3-H1OCro(7F,8F)-5 | (2-20) | 3% |
| 3-HH-V | (3-1) | 23% |
| 4-HH-V | (3-1) | 3% |
| 5-HH-V | (3-1) | 6% |
| 7-HB-1 | (3-2) | 3% |
| V-HHB-1 | (3-5) | 4% |
| V-HBB-2 | (3-6) | 3% |
| 2-BB(F)B-3 | (3-8) | 3% |

The preceding composition having negative dielectric anisotropy was prepared, and the characteristics were measured. NI= 77.1 °C; Tc< -20 °C; Δn= 0.100; Δε= -2.9; Vth= 2.30 V; η= 21.2 mPa•s. Compound (1-5) was added to the composition in the ratio of 0.03% by weight, and VHR-11 was measured. VHR-11= 82.5%.

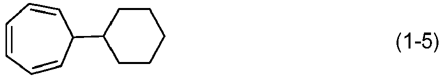

### Example 18

| | | |
|---|---|---|
| 3-HB(2F,3F)-O2 | (2-1) | 6% |
| 3-BB(2F,3F)-O4 | (2-5) | 6% |
| V2-BB (2F,3F)-O2 | (2-5) | 12% |
| 3-HHB(2F,3F)-O2 | (2-7) | 8% |
| V-HHB(2F,3F)-O1 | (2-7) | 6% |
| V2-HHB(2F,3F)-O2 | (2-7) | 12% |
| 3-HDhB(2F,3F)-O2 | (2-13) | 5% |
| 3-HH-V | (3-1) | 23% |
| 4-HH-V | (3-1) | 3% |
| 5-HH-V | (3-1) | 6% |
| 7-HB-1 | (3-2) | 3% |
| V-HHB-1 | (3-5) | 4% |
| V-HBB-2 | (3-6) | 3% |
| 2-BB(F)B-3 | (3-8) | 3% |

The preceding composition having negative dielectric anisotropy was prepared, and the characteristics were measured. NI= 72.3 °C; Tc< -20 °C; Δn= 0.098; Δε= -2.8; Vth= 2.28 V; η= 17.8 mPa•s. Compound (1-6) was added to the composition in the ratio of 0.03% by weight, and VHR-11 was measured. VHR-11= 83.4%.

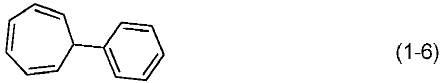

**Comparison:** In Examples 1 to 3, the voltage holding ratio (VHR-11) was measured in accordance with the method described in measurement (10). First, a composition to which the first additive (quencher) was not added was poured into a TN device. After the device had been irradiated with ultraviolet light of 5 mW/cm² for 167 minutes, the voltage holding ratio was measured. Next, a composition to which the first additive was added was poured into a TN device, and the voltage holding ratio was measured after irradiation in the same manner. The effect of the first additive was evaluated by the comparison of these measured values. The results were summarized in Table 4. In Examples 1 to 3, the voltage holding ratio (VHR-11) was approximately 36% when the first additive was not added. VHR-11 can be controlled to approximately 65% by adding the first additive to the composition. In Examples 4 to 18, VHR-11 was in the range of 65.8% to 89.7%, and a high voltage holding ratio can be maintained. Thus, it can be concluded that the liquid crystal composition of the invention has excellent characteristics.

**Table 4. Effect of the addition of the first additive (quencher)**

| | First additive | Voltage holding ratio before the addition (VHR-11) | Voltage holding ratio after the addition (VHR-11) |
|---|---|---|---|
| Example 1 | Compound (1-1) | 36.3% | 65.2% |
| Example 2 | Compound (1-1) | 34.7% | 62.4% |
| Example 3 | Compound (1-2) | 37.9% | 70.5% |

### Industrial Applicability

The liquid crystal composition of the invention can be used for a liquid crystal projector, a liquid crystal television and so forth, since it has a short response time, a large voltage holding ratio, a low threshold voltage, a large contrast ratio and a long service life.

## Claims

1. A liquid crystal composition having a nematic phase and negative dielectric anisotropy and including at least one quencher as a first additive and at least one compound selected from the group of compounds represented by formula (2) as a first component: 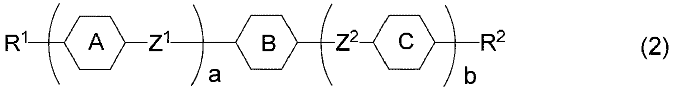 in formula (2), R¹ and R² are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine; ring A and ring C are independently 1,4-cyclohexylene, 1,4-cyclohexenylene, 1,4-phenylene, 1,4-phenylene in which at least one hydrogen has been replaced by fluorine or chlorine or tetrahydropyran-2,5-diyl; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7, 8-difluorochroman-2, 6-diyl; Z¹ and Z² are independently a single bond, ethylene, methyleneoxy or carbonyloxy; a is 1, 2 or 3, b is 0 or 1; and the sum of a and b is 3 or less.

2. The liquid crystal composition according to claim 1, wherein the first additive is a nonaromatic compound having conjugated double bonds, and the number of the conjugated double bonds is an integer from 2 to 10.

3. The liquid crystal composition according to claim 1 or 2, wherein the first additive is at least one compound selected from the group of compounds represented by formula (1-1) to formula (1-6): 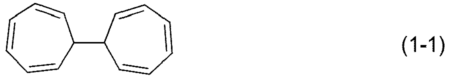 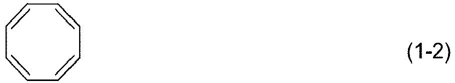 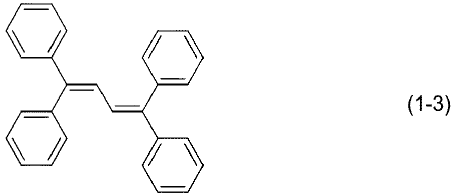 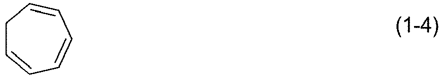 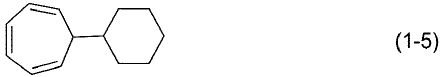 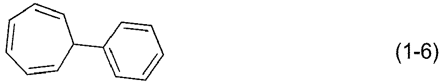 in formula (1-1) to formula (1-6), at least one hydrogen on the ring may be replaced by fluorine, chlorine, alkyl having 1 to 12 carbons, alkoxy having 1 to 12 carbons, alkenyl having 2 to 12 carbons or alkyl having 1 to 12 carbons in which at least one hydrogen has been replaced by fluorine or chlorine.

4. The liquid crystal composition according to any one of claims 1 to 3, wherein the first additive is at least one compound selected from the group of compounds represented by formula (1-1) to formula (1-6) :

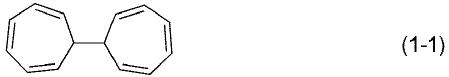

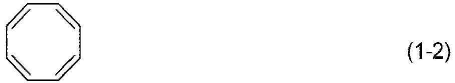

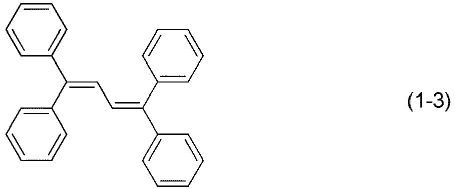

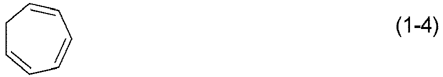

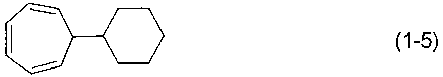

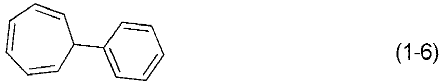

5. The liquid crystal composition according to any one of claims 1 to 4, wherein the ratio of the first additive is in the range of 0.005% by weight to 2% by weight based on the weight of the liquid crystal composition.

6. The liquid crystal composition according to any one of claims 1 to 5, including at least one compound selected from the group of compounds represented by formula (2-1) to formula (2-21) as a first component: 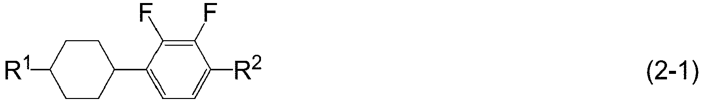 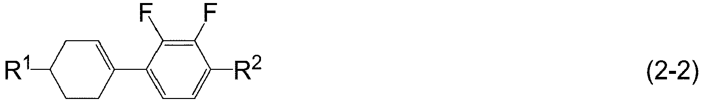 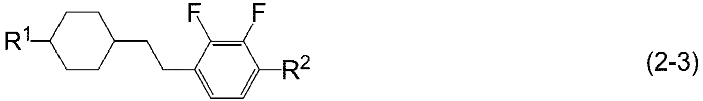 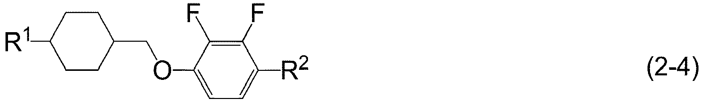 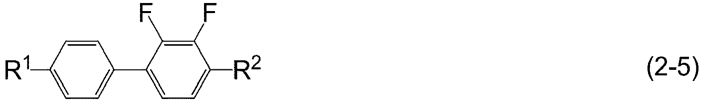 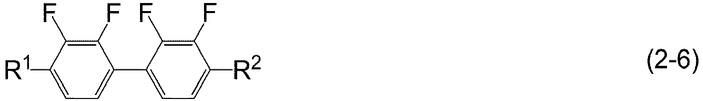 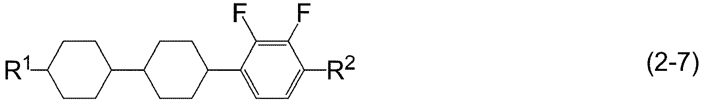 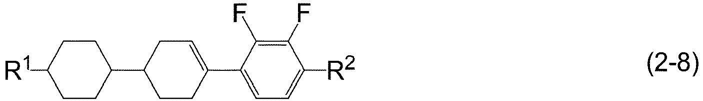 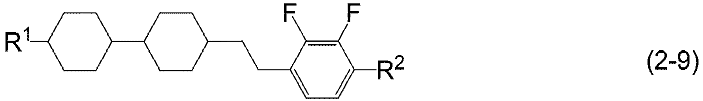 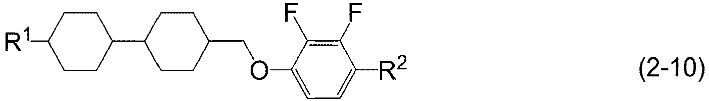 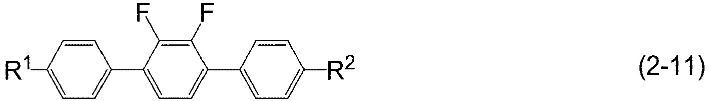 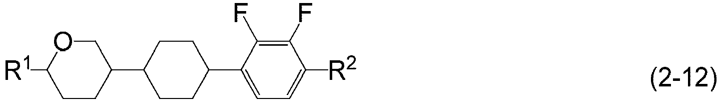 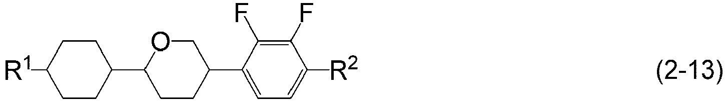 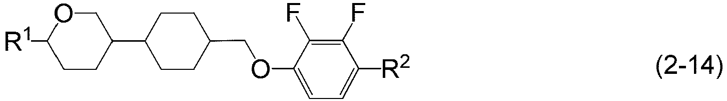 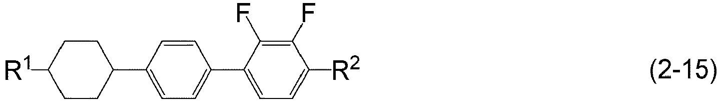 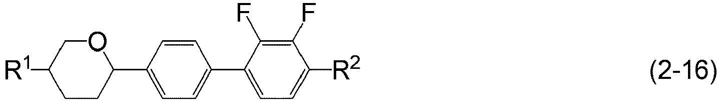 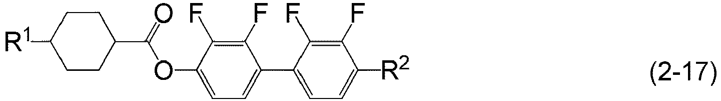 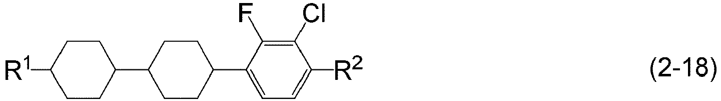 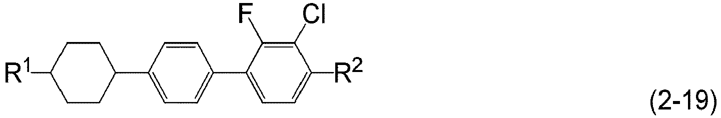 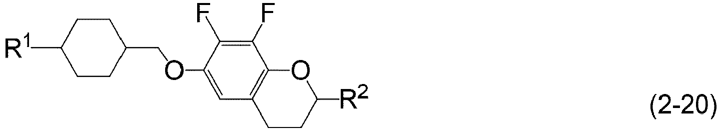 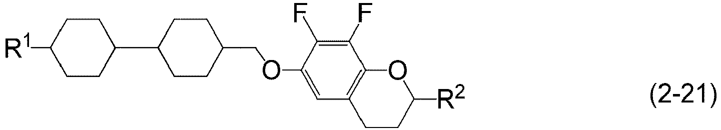 in formula (2-1) to formula (2-21), R¹ and R² are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine.

7. The liquid crystal composition according to claim 1 or 6, wherein the ratio of the first component is in the range of 10% by weight to 90% by weight based on the weight of the liquid crystal composition.

8. The liquid crystal composition according to any one of claims 1 to 7, including at least one compound selected from the group of compounds represented by formula (3) as a second component: 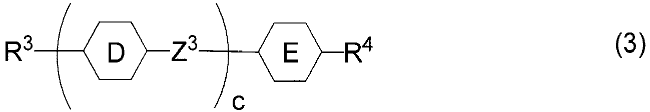 in formula (3), R³ and R⁴ are independently alkyl having 1 to 12 carbons, alkoxy having 1 to 12 carbons, alkenyl having 2 to 12 carbons or alkenyl having 2 to 12 carbons in which at least one hydrogen has been replaced by fluorine or chlorine; ring D and ring E are independently 1,4-cyclohexylene, 1,4-phenylene, 2-fluoro-1,4-phenylene or 2,5-difluoro-1,4-phenylene; Z³ is a single bond, ethylene or carbonyloxy; and c is 1, 2 or 3.

9. The liquid crystal composition according to any one of claims 1 to 8, including at least one compound selected from the group of compounds represented by formula (3-1) to formula (3-13) as a second component: 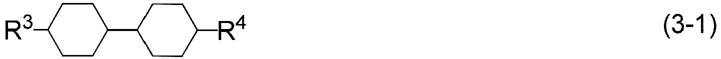 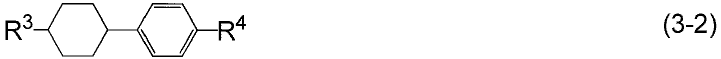 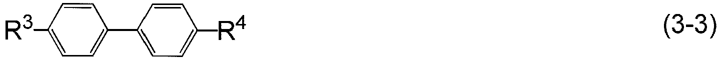 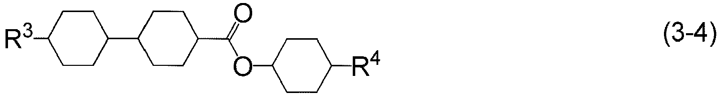 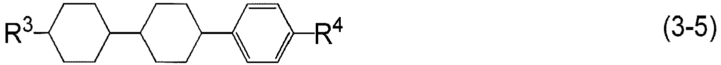 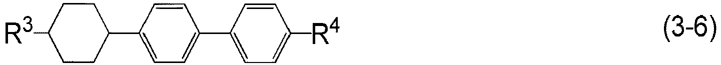 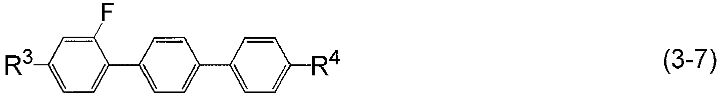 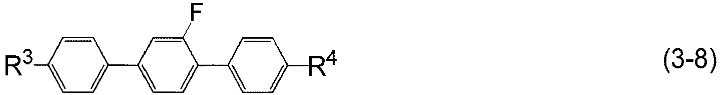 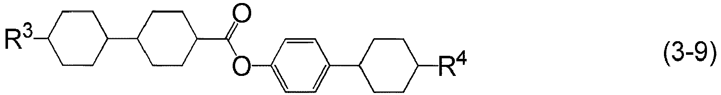 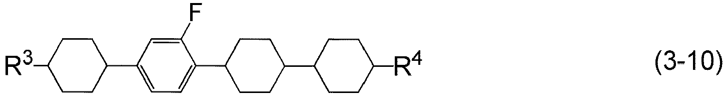 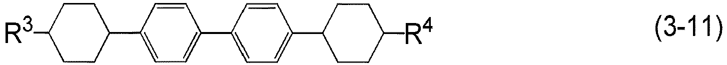 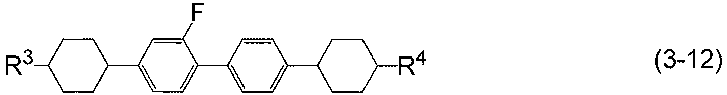 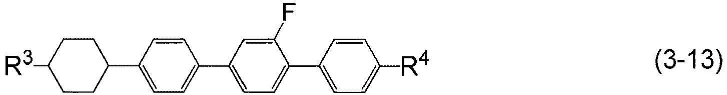 in formula (3-1) to formula (3-13), R³ and R⁴ are independently alkyl having 1 to 12 carbons, alkoxy having 1 to 12 carbons, alkenyl having 2 to 12 carbons or alkenyl having 2 to 12 carbons in which at least one hydrogen has been replaced by fluorine or chlorine.

10. The liquid crystal composition according to claim 8 or 9, wherein the ratio of the second component is in the range of 10% by weight to 90% by weight based on the weight of the liquid crystal composition.

11. The liquid crystal composition according to any one of claims 1 to 10, including at least one polymerizable compound selected from the group of compounds represented by formula (4) as a second additive: 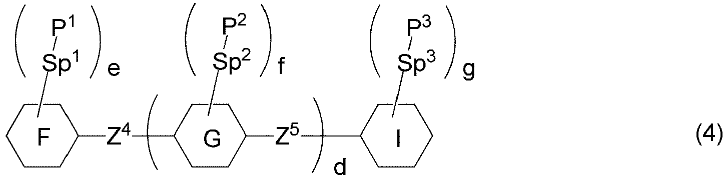 in formula (4), ring F and ring I are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in these rings at least one hydrogen may be replaced by fluorine, chlorine, alkyl having 1 to 12 carbons, alkoxy having 1 to 12 carbons or alkyl having 1 to 12 carbons in which at least one hydrogen has been replaced by fluorine or chlorine; ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in these rings at least one hydrogen may be replaced by fluorine, chlorine, alkyl having 1 to 12 carbons, alkoxy having 1 to 12 carbons or alkyl having 1 to 12 carbons in which at least one hydrogen has been replaced by fluorine or chlorine; Z⁴ and Z⁵ are independently a single bond or alkylene having 1 to 10 carbons, and in the alkylene at least one -CH₂- may be replaced by -O-, -CO-, -COO- or -OCO-, at least one -CH₂-CH₂- may be replaced by -CH=CH-, -C(CH₃)=CH-, -CH=C(CH₃)- or -C(CH₃)=C(CH₃)-, and in these groups at least one hydrogen may be replaced by fluorine or chlorine; P¹, P² and P³ are independently a polymerizable group; Sp¹, Sp² and Sp³ are independently a single bond or alkylene having 1 to 10 carbons, and in the alkylene at least one -CH₂- may be replaced by, -O-, -COO-, -OCO- or -OCOO-, at least one -CH₂-CH₂- may be replaced by -CH=CH- or -C≡C-, and in these groups at least one hydrogen may be replaced by fluorine or chlorine; d is 0, 1 or 2; e, f and g are independently 0, 1, 2, 3 or 4; and the sum of e, f and g is 1 or more.

12. The liquid crystal composition according to claim 11, wherein in formula (4), P¹, P² and P³ are independently a polymerizable group selected from the group of groups represented by formula (P-1) to formula (P-5): 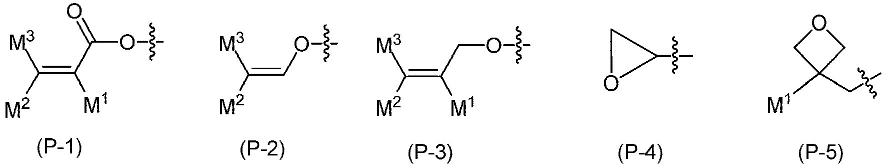 in formula (P-1) to formula (P-5), M¹, M² and M³ are independently hydrogen, fluorine, alkyl having 1 to 5 carbons or alkyl having 1 to 5 carbons in which at least one hydrogen has been replaced by fluorine or chlorine.

13. The liquid crystal composition according to claim 11 or 12, wherein the ratio of the second additive is in the range of 0.03% by weight to 10% by weight based on the weight of the liquid crystal composition.

14. A liquid crystal display device including the liquid crystal composition according to any one of claims 1 to 13.

15. Use of the liquid crystal composition according to any one of claims 1 to 14 for the liquid crystal display device.

## Patentansprüche

1. Flüssigkristallzusammensetzung, die eine nematische Phase und negative dielektrische Anisotropie aufweist und die zumindest einen Quencher als ein erstes Additiv und zumindest eine Verbindung ausgewählt aus der Gruppe der durch Formel (2) dargestellten Verbindungen als eine erste Komponente beinhaltet: 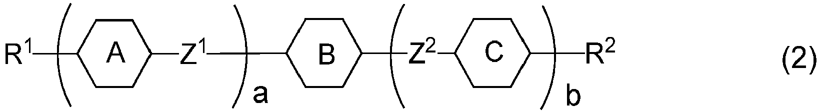 in der Formel (2) sind R¹ und R² unabhängig Alkyl mit 1 bis 12 Kohlenstoffen, Alkoxy mit 1 bis 12 Kohlenstoffen, Alkenyl mit 2 bis 12 Kohlenstoffen, Alkenyloxy mit 2 bis 12 Kohlenstoffen oder Alkyl mit 1 bis 12 Kohlenstoffen, wobei zumindest ein Wasserstoff durch Fluor oder Chlor ersetzt wurde; Ring A und Ring C sind unabhängig 1,4-Cyclohexylen, 1,4-Cyclohexenylen, 1,4-Phenylen, 1,4-Phenylen, wobei zumindest ein Wasserstoff durch Fluor oder Chlor ersetzt wurde, oder Tetrahydropyran-2,5-diyl; Ring B ist 2,3-Difluor-1,4-phenylen, 2-Chlor-3-fluor-1,4-phenylen, 2,3-Difluor-5-methyl-1,4-phenylen, 3,4,5-Trifluornaphthalin-2,6-diyl oder 7,8-Difluorochroman-2,6-diyl; Z¹ und Z² sind unabhängig eine Einfachbindung, Ethylen, Methylenoxy oder Carbonyloxy; a ist 1, 2 oder 3, b ist 0 oder 1; und die Summe aus a und b ist 3 oder weniger.

2. Flüssigkristallzusammensetzung nach Anspruch 1, wobei das erste Additiv eine nicht-aromatische Verbindung mit konjugierten Doppelbindungen ist und die Anzahl der konjugierten Doppelbindungen eine ganze Zahl von 2 bis 10 ist.

3. Flüssigkristallzusammensetzung nach Anspruch 1 oder 2, wobei das erste Additiv zumindest eine Verbindung ausgewählt aus der Gruppe der durch Formel (1-1) bis Formel (1-6) dargestellten Verbindungen ist: 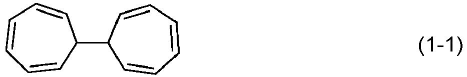 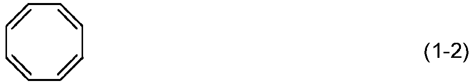 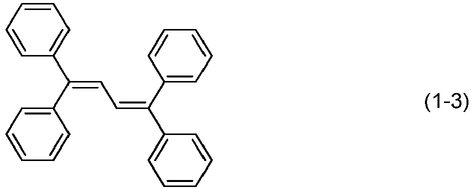 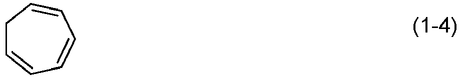 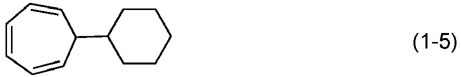 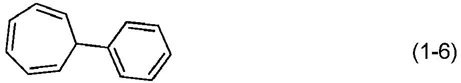 in Formel (1-1) bis Formel (1-6) kann zumindest ein Wasserstoff am Ring durch Fluor, Chlor, Alkyl mit 1 bis 12 Kohlenstoffen, Alkoxy mit 1 bis 12 Kohlenstoffen, Alkenyl mit 2 bis 12 Kohlenstoffen oder Alkyl mit 1 bis 12 Kohlenstoffen, wobei zumindest ein Wasserstoff durch Fluor oder Chlor ersetzt wurde, ersetzt sein.

4. Flüssigkristallzusammensetzung nach einem der Ansprüche 1 bis 3, wobei das erste Additiv zumindest eine Verbindung ausgewählt aus der Gruppe der durch Formel (1-1) bis Formel (1-6) dargestellten Verbindungen ist:

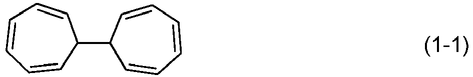

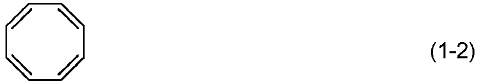

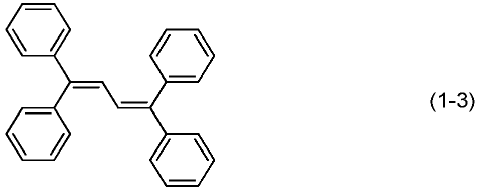

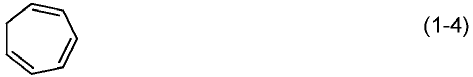

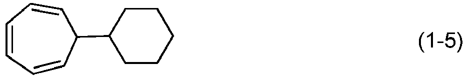

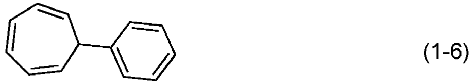

5. Flüssigkristallzusammensetzung nach einem der Ansprüche 1 bis 4, wobei das Verhältnis des ersten Additivs im Bereich von 0,005 Gew.-% bis 2 Gew.-%, bezogen auf das Gewicht der Flüssigkristallzusammensetzung, liegt.

6. Flüssigkristallzusammensetzung nach einem der Ansprüche 1 bis 5, die zumindest eine Verbindung ausgewählt aus der Gruppe der durch Formel (2-1) bis Formel (2-21) dargestellten Verbindungen als eine erste Komponente beinhaltet: 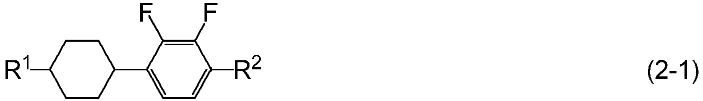 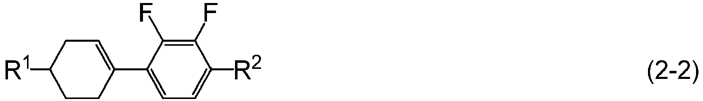 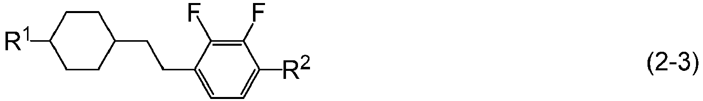 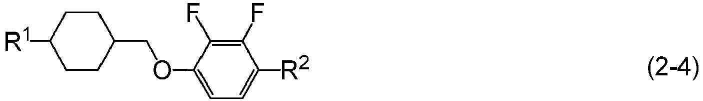 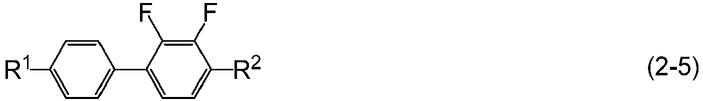 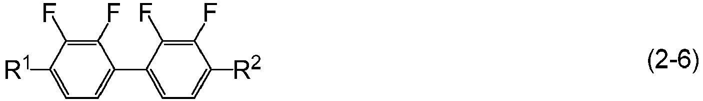 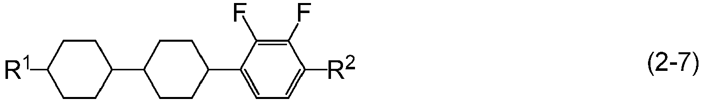 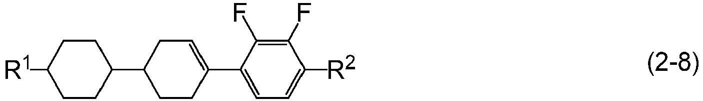 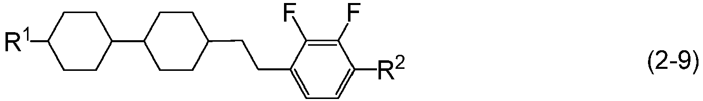 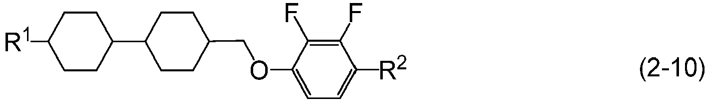 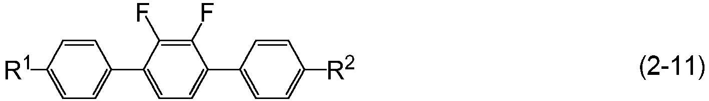 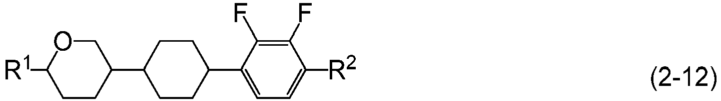 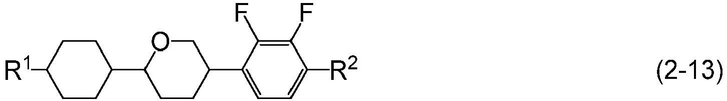 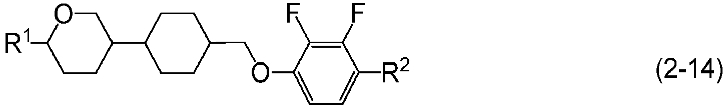 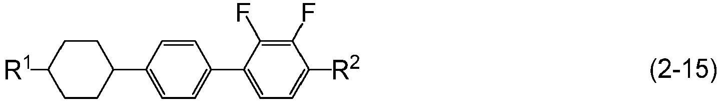 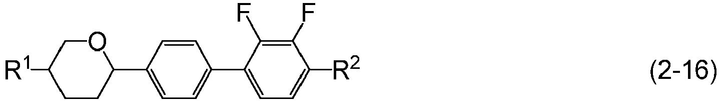 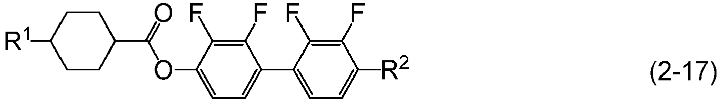 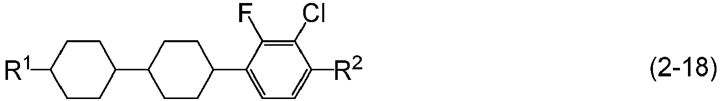 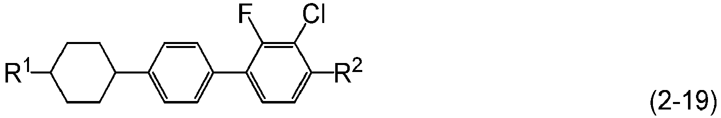 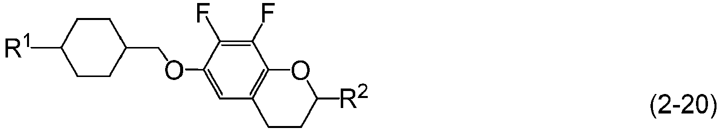 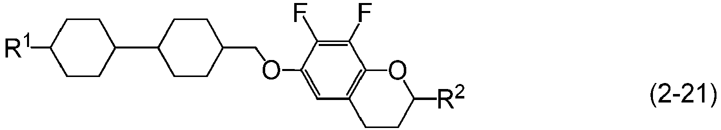 in Formel (2-1) bis Formel (2-21) sind R¹ und R² unabhängig Alkyl mit 1 bis 12 Kohlenstoffen, Alkoxy mit 1 bis 12 Kohlenstoffen, Alkenyl mit 2 bis 12 Kohlenstoffen, Alkenyloxy mit 2 bis 12 Kohlenstoffen oder Alkyl mit 1 bis 12 Kohlenstoffen, wobei zumindest ein Wasserstoff durch Fluor oder Chlor ersetzt wurde.

7. Flüssigkristallzusammensetzung nach Anspruch 1 oder 6, wobei das Verhältnis der ersten Komponente im Bereich von 10 Gew.-% bis 90 Gew.-%, bezogen auf das Gewicht der Flüssigkristallzusammensetzung, liegt.

8. Flüssigkristallzusammensetzung nach einem der Ansprüche 1 bis 7, die zumindest eine Verbindung ausgewählt aus der Gruppe der durch Formel (3) dargestellten Verbindungen als eine zweite Komponente beinhaltet: 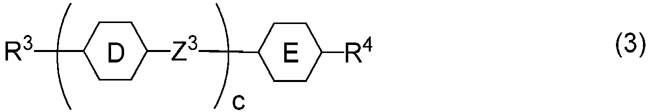 in Formel (3) sind R³ und R⁴ unabhängig Alkyl mit 1 bis 12 Kohlenstoffen, Alkoxy mit 1 bis 12 Kohlenstoffen, Alkenyl mit 2 bis 12 Kohlenstoffen oder Alkenyl mit 2 bis 12 Kohlenstoffen, wobei zumindest ein Wasserstoff durch Fluor oder Chlor ersetzt wurde; Ring D und Ring E sind unabhängig 1,4-Cyclohexylen, 1,4-Phenylen, 2-Fluor-1,4-phenylen oder 2,5-Difluor-1,4-phenylen; Z³ ist eine Einfachbindung, Ethylen oder Carbonyloxy; und c ist 1, 2 oder 3.

9. Flüssigkristallzusammensetzung nach einem der Ansprüche 1 bis 8, die zumindest eine Verbindung ausgewählt aus der Gruppe der durch die Formel (3-1) bis Formel (3-13) dargestellten Verbindungen der als eine zweite Komponente beinhaltet: 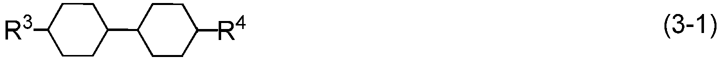 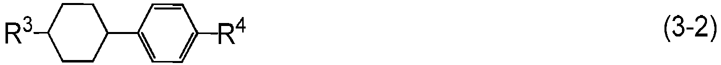 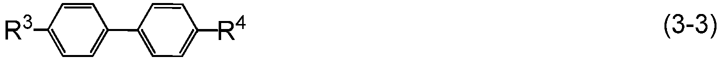 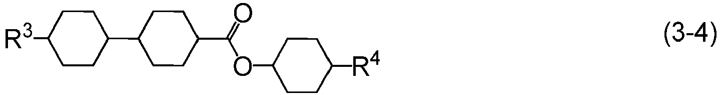 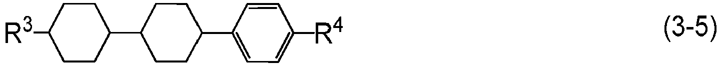 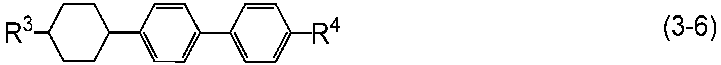 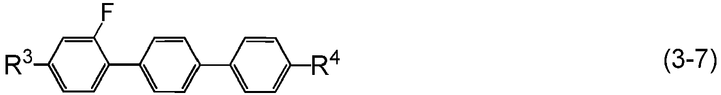 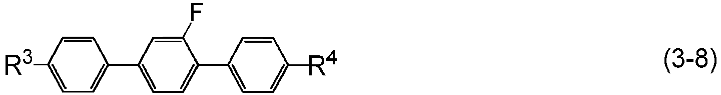 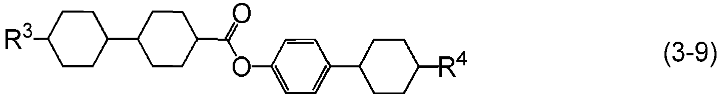 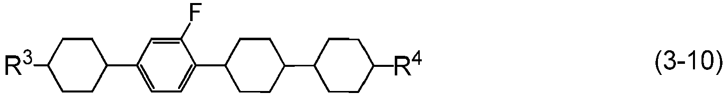 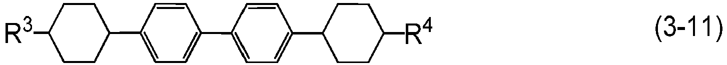 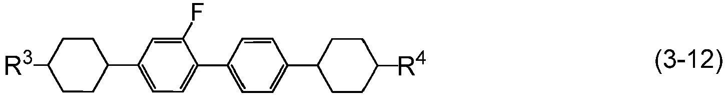 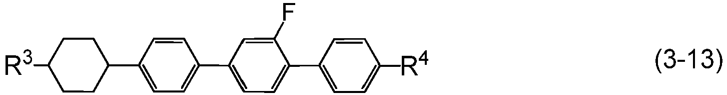 in Formel (3-1) bis Formel (3-13) sind R³ und R⁴ unabhängig Alkyl mit 1 bis 12 Kohlenstoffen, Alkoxy mit 1 bis 12 Kohlenstoffen, Alkenyl mit 2 bis 12 Kohlenstoffen oder Alkenyl mit 2 bis 12 Kohlenstoffen, wobei zumindest ein Wasserstoff durch Fluor oder Chlor ersetzt wurde.

10. Flüssigkristallzusammensetzung nach Anspruch 8 oder 9, wobei das Verhältnis der zweiten Komponente im Bereich von 10 Gew.-% bis 90 Gew.-%, bezogen auf das Gewicht der Flüssigkristallzusammensetzung, liegt.

11. Flüssigkristallzusammensetzung nach einem der Ansprüche 1 bis 10, die zumindest eine polymerisierbare Verbindung ausgewählt aus der Gruppe der durch Formel (4) dargestellten Verbindungen als ein zweites Additiv beinhaltet: 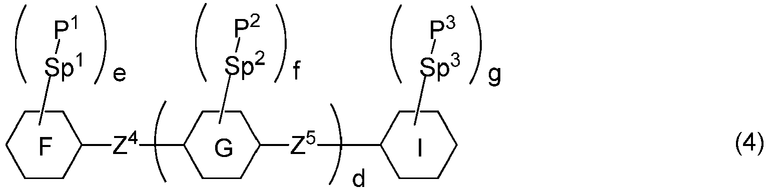 in Formel (4) sind Ring F und Ring I unabhängig Cyclohexyl, Cyclohexenyl, Phenyl, 1-Naphthyl, 2-Naphthyl, Tetrahydropyran-2-yl, 1,3-Dioxan-2-yl, Pyrimidin-2-yl oder Pyridin-2-yl, und in diesen Ringen kann zumindest ein Wasserstoff durch Fluor, Chlor, Alkyl mit 1 bis 12 Kohlenstoffen, Alkoxy mit 1 bis 12 Kohlenstoffen oder Alkyl mit 1 bis 12 Kohlenstoffen, wobei zumindest ein Wasserstoff durch Fluor oder Chlor ersetzt wurde, ersetzt sein; Ring G ist 1,4-Cyclohexylen, 1,4-Cyclohexenylen, 1,4-Phenylen, Naphthalin-1,2-diyl, Naphthalin-1,3-diyl, Naphthalin-1,4-diyl, Naphthalin-1,5-diyl, Naphthalin-1,6-Diyl, Naphthalin-1,7-Diyl, Naphthalin-1,8-Diyl, Naphthalin-2,3-diyl, Naphthalin-2,6-Diyl, Naphthalin-2,7-Diyl, Tetrahydropyran-2,5-diyl, 1,3-Dioxan-2,5-diyl, Pyrimidin-2,5-diyl oder Pyridin-2,5-diyl, und in diesen Ringen kann zumindest ein Wasserstoff durch Fluor, Chlor, Alkyl mit 1 bis 12 Kohlenstoffen, Alkoxy mit 1 bis 12 Kohlenstoffen oder Alkyl mit 1 bis 12 Kohlenstoffen, wobei zumindest ein Wasserstoff durch Fluor oder Chlor ersetzt wurde, ersetzt sein; Z⁴ und Z⁵ sind unabhängig eine Einfachbindung oder Alkylen mit 1 bis 10 Kohlenstoffen, und in dem Alkylen kann zumindest ein -CH₂- durch -O-, -CO-, -COO- oder -OCO- ersetzt sein, kann zumindest ein -CH₂-CH₂- durch -CH=CH-, -C(CH₃)=CH-, -CH=C(CH₃)- oder -C(CH₃)=C(CH₃)- ersetzt sein, und in diesen Gruppen kann zumindest ein Wasserstoff durch Fluor oder Chlor ersetzt sein; P¹, P² und P³ sind unabhängig eine polymerisierbare Gruppe; Sp¹, Sp² und Sp³ sind unabhängig eine Einfachbindung oder Alkylen mit 1 bis 10 Kohlenstoffen, und in dem Alkylen kann zumindest ein -CH₂- durch -O-, -COO-, -OCO- oder -OCOO- ersetzt sein, kann zumindest ein -CH₂-CH₂- durch -CH=CH- oder -C≡C- ersetzt sein, und in diesen Gruppen kann zumindest ein Wasserstoff durch Fluor oder Chlor ersetzt sein; d ist 0, 1 oder 2; e, f und g sind unabhängig 0, 1, 2, 3 oder 4; und die Summe aus e, f und g ist 1 oder mehr.

12. Flüssigkristallzusammensetzung nach Anspruch 11, wobei in Formel (4) P¹, P² und P³ unabhängig eine polymerisierbare Gruppe ausgewählt aus der Gruppe der durch Formel (P-1) bis Formel (P-5) dargestellten Gruppen sind: 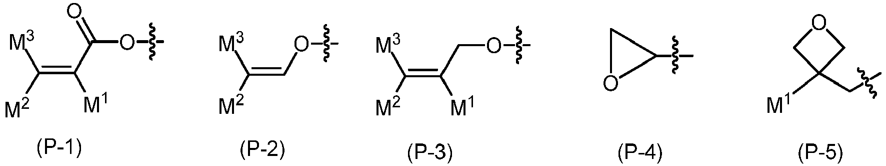 in Formel (P-1) bis Formel (P-5) sind M¹, M² und M³ unabhängig Wasserstoff, Fluor, Alkyl mit 1 bis 5 Kohlenstoffen oder Alkyl mit 1 bis 5 Kohlenstoffen, wobei zumindest ein Wasserstoff durch Fluor oder Chlor ersetzt wurde.

13. Flüssigkristallzusammensetzung nach Anspruch 11 oder 12, wobei das Verhältnis des zweiten Additivs im Bereich von 0,03 Gew.-% bis 10 Gew.-%, bezogen auf das Gewicht der Flüssigkristallzusammensetzung, liegt.

14. Flüssigkristallanzeigevorrichtung, die die Flüssigkristallzusammensetzung nach einem der Ansprüche 1 bis 13 beinhaltet.

15. Verwendung der Flüssigkristallzusammensetzung nach einem der Ansprüche 1 bis 14 für die Flüssigkristallanzeigevorrichtung.

## Revendications

1. Composition de cristaux liquides ayant une phase nématique et une anisotropie diélectrique négative et contenant au moins un agent d'extinction à titre de premier additif et au moins un composé choisi dans le groupe des composés représentés par la formule (2) à titre de premier composant : 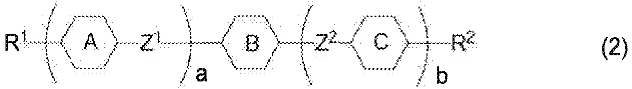 dans la formule (2), R¹ et R² sont indépendamment un alkyle ayant 1 à 12 carbones, un alcoxy ayant 1 à 12 carbones, un alcényle ayant 2 à 12 carbones, un alcényloxy ayant 2 à 12 carbones ou un alkyle ayant 1 à 12 carbones dans lequel au moins un hydrogène a été remplacé par un atome de fluor ou de chlore ; cycle A et cycle C sont indépendamment un 1,4-cyclohexylène, 1,4-cyclohexénylène, 1,4-phénylène, 1,4-phénylène dans lequel au moins un hydrogène a été remplacé par un atome de fluor ou de chlore ou un tétrahydropyran-2,5-diyle ; cycle B est un 2,3-difluoro-1,4-phénylène, 2-chloro-3-fluoro-1,4-phénylène, 2,3-difluoro-5-méthyl-1,4-phénylène, 3,4,5-trifluoronaphtalène-2,6-diyle ou 7,8-difluorochroman-2,6-diyle ; Z¹ et Z² sont indépendamment une liaison simple, un éthylène, méthylèneoxy ou carbonyloxy ; a est 1, 2 ou 3, b est 0 ou 1 ; et la somme de a et b est de 3 ou moins.

2. Composition de cristaux liquides selon la revendication 1, dans laquelle le premier additif est un composé non aromatique ayant des doubles liaisons conjuguées, et le nombre de doubles liaisons conjuguées est un entier de 2 à 10.

3. Composition de cristaux liquides selon la revendication 1 ou 2, dans laquelle le premier additif est au moins un composé choisi dans le groupe des composés représentés par la formule (1-1) à la formule (1-6) : 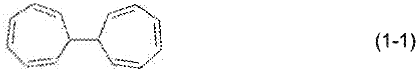 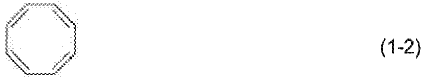 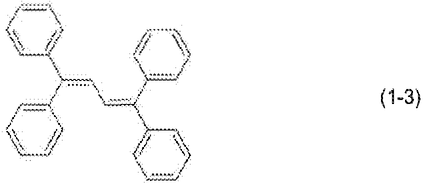 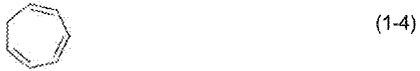 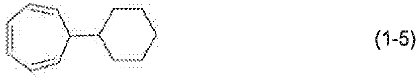 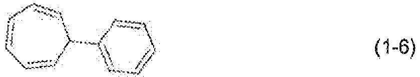 dans la formule (1-1) à la formule (1-6), au moins un hydrogène sur le cycle peut être remplacé par un atome de fluor, un atome de chlore, un alkyle ayant 1 à 12 carbones, un alcoxy ayant 1 à 12 carbones, un alcényle ayant 2 à 12 carbones ou un alkyle ayant 1 à 12 carbones dans lequel au moins un hydrogène a été remplacé par un atome de fluor ou de chlore.

4. Composition de cristaux liquides selon l'une quelconque des revendications 1 à 3, dans laquelle le premier additif est au moins un composé choisi dans le groupe des composés représentés par la formule (1-1) à la formule (1-6) :

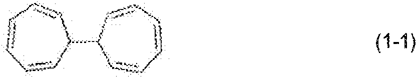

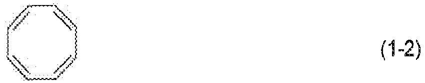

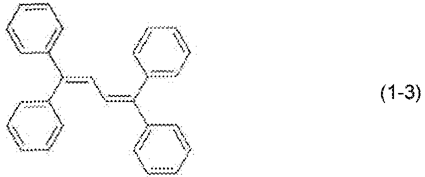

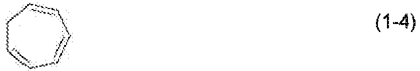

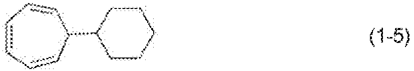

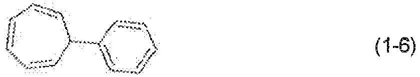

5. Composition de cristaux liquides selon l'une quelconque des revendications 1 à 4, dans laquelle la proportion du premier additif est dans la plage de 0,005 à 2 % en poids, sur la base du poids de la composition de cristaux liquides.

6. Composition de cristaux liquides selon l'une quelconque des revendications 1 à 5, contenant au moins un composé choisi dans le groupe des composés représentés par la formule (2-1) à la formule (2-21) à titre de premier composant : 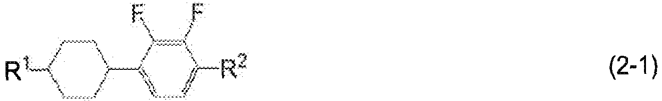 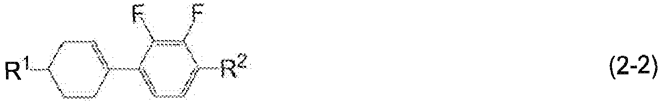 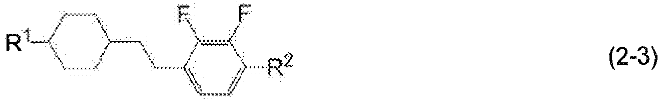 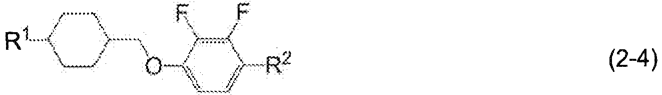 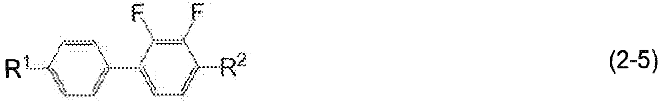 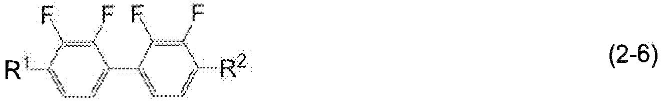 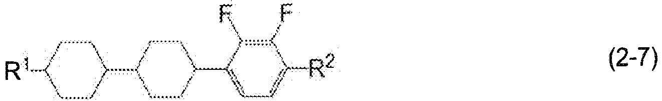 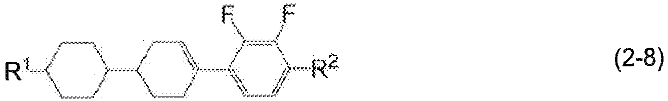 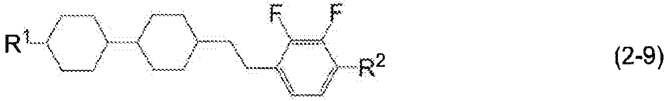 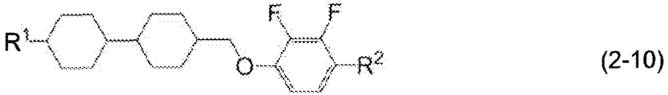 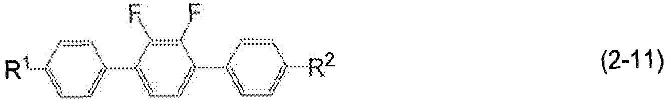 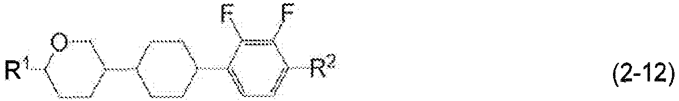 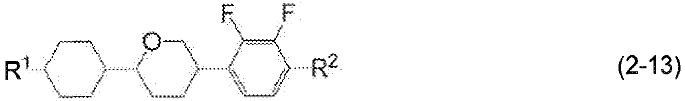 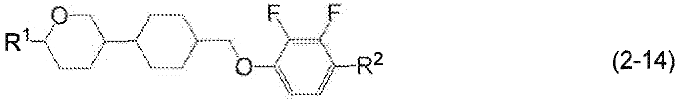 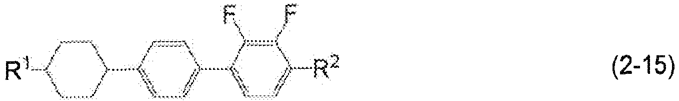 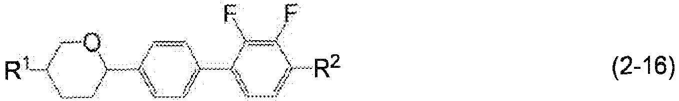 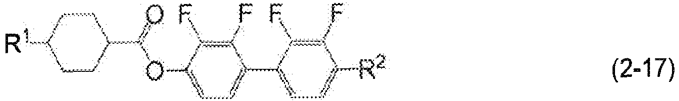 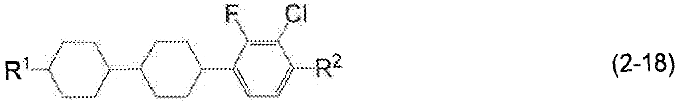 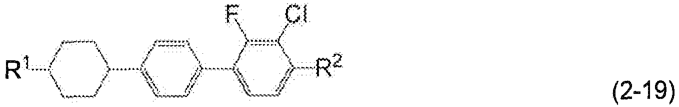 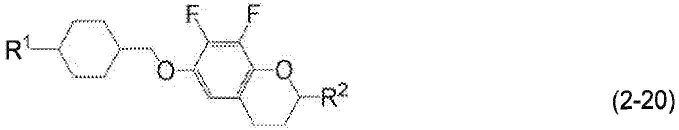 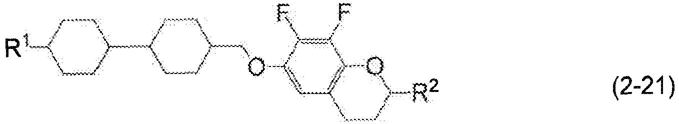 dans la formule (2-1) à la formule (2-21), R¹ et R² sont indépendamment un alkyle ayant 1 à 12 carbones, un alcoxy ayant 1 à 12 carbones, un alcényle ayant 2 à 12 carbones, un alcényloxy ayant 2 à 12 carbones ou un alkyle ayant 1 à 12 carbones dans lequel au moins un hydrogène a été remplacé par un atome de fluor ou de chlore.

7. Composition de cristaux liquides selon la revendication 1 ou 6, dans laquelle la proportion du premier composant est dans la plage de 10 à 90 % en poids, sur la base du poids de la composition de cristaux liquides.

8. Composition de cristaux liquides selon l'une quelconque des revendications 1 à 7, contenant au moins un composé choisi dans le groupe des composés représentés par la formule (3) à titre de second composant : 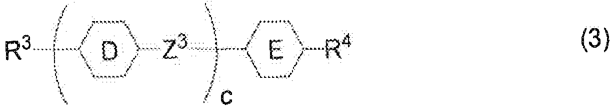 dans la formule (3), R³ et R⁴ sont indépendamment un alkyle ayant 1 à 12 carbones, un alcoxy ayant 1 à 12 carbones, un alcényle ayant 2 à 12 carbones ou un alcényle ayant 2 à 12 carbones dans lequel au moins un hydrogène a été remplacé par un atome de fluor ou de chlore ; cycle D et cycle E sont indépendamment un 1,4-cyclohexylène, 1,4-phénylène, 2-fluoro-1,4-phénylène ou 2,5-difluoro-1,4-phénylène ; Z³ est une liaison simple, un éthylène ou carbonyloxy ; et c est 1, 2 ou 3.

9. Composition de cristaux liquides selon l'une quelconque des revendications 1 à 8, contenant au moins un composé choisi dans le groupe des composés représentés par la formule (3-1) à la formule (3-13) à titre de second composant : 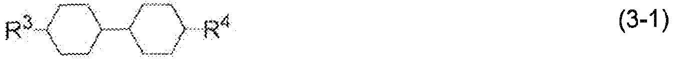 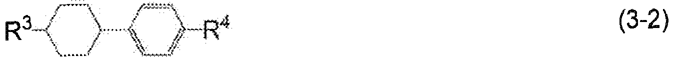 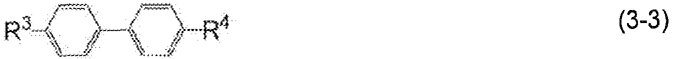 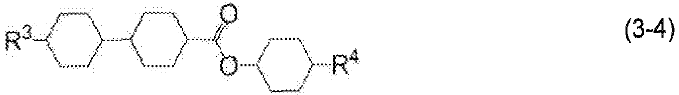 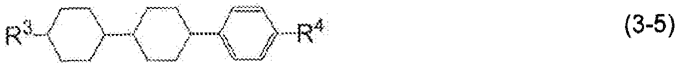 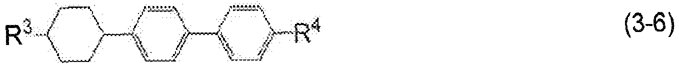 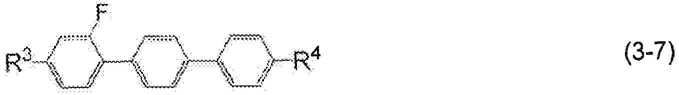 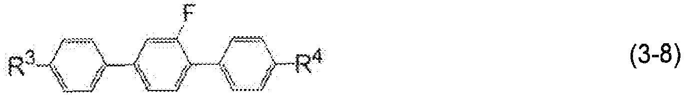 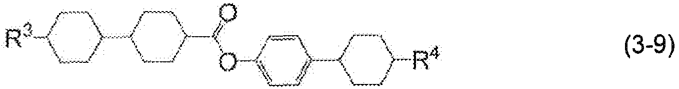 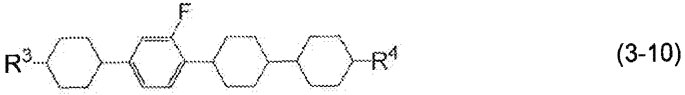 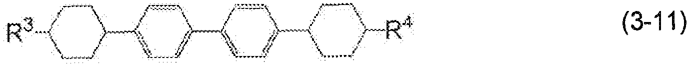 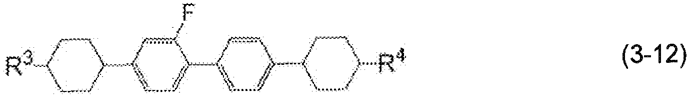 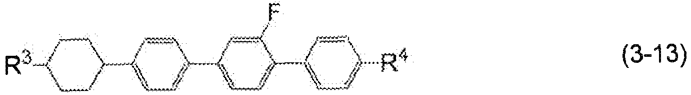 dans la formule (3-1) à la formule (3-13), R³ et R⁴ sont indépendamment un alkyle ayant 1 à 12 carbones, un alcoxy ayant 1 à 12 carbones, un alcényle ayant 2 à 12 carbones ou un alcényle ayant 2 à 12 carbones dans lequel au moins un hydrogène a été remplacé par un atome de fluor ou de chlore.

10. Composition de cristaux liquides selon la revendication 8 ou 9, dans laquelle la proportion du second composant est dans la plage de 10 à 90 % en poids, sur la base du poids de la composition de cristaux liquides.

11. Composition de cristaux liquides selon l'une quelconque des revendications 1 à 10, contenant au moins un composé polymérisable choisi dans le groupe des composés représentés par la formule (4) à titre de second additif : 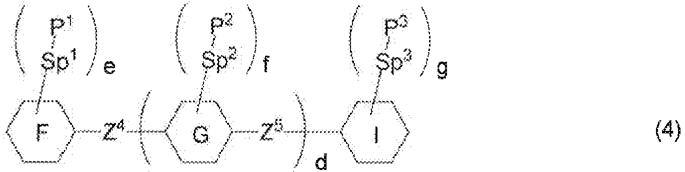 dans la formule (4), cycle F et cycle I sont indépendamment un cyclohexyle, cyclohexényle, phényle, 1-naphtyle, 2-naphtyle, tétrahydropyran-2-yle, 1,3-dioxane-2-yle, pyrimidine-2-yle ou pyridine-2-yle, et dans ces cycles au moins un hydrogène a été remplacé par un atome de fluor ou de chlore, un alkyle ayant 1 à 12 carbones, un alcoxy ayant 1 à 12 carbones ou un alkyle ayant 1 à 12 carbones dans lequel au moins un hydrogène a été remplacé par un atome de fluor ou de chlore ; cycle G est un 1,4-cyclohexylène, 1,4-cyclohexénylène, 1,4-phénylène, naphtalène-1,2-diyle, naphtalène-1,3-diyle, naphtalène-1,4-diyle, naphtalène-1,5-diyle, naphtalène-1,6-diyle, naphtalène-1,7-diyle, naphtalène-1,8-diyle, naphtalène-2,3-diyle, naphtalène-2,6-diyle, naphtalène-2,7-diyle, tétrahydropyran-2,5-diyle, 1,3-dioxane-2,5-diyle, pyrimidine-2,5-diyle ou pyridine-2,5-diyle, et dans ces cycles au moins un hydrogène peut être remplacé par un atome de fluor ou de chlore, un alkyle ayant 1 à 12 carbones, un alcoxy ayant 1 à 12 carbones ou un alkyle ayant 1 à 12 carbones dans lequel au moins un hydrogène a été remplacé par un atome de fluor ou de chlore ; Z⁴ et Z⁵ sont indépendamment une liaison simple ou un alkylène ayant 1 à 10 carbones, et dans l'alkylène au moins un -CH₂- peut être remplacé par -O-, -CO-, -COO- ou -OCO-, au moins un -CH₂-CH₂- peut être remplacé par -CH=CH, -C(CH₃)=CH-, -CH=C(CH₃)- ou-C(CH₃)=C(CH₃)-, et dans ces groupes au moins un hydrogène peut être remplacé par un atome de fluor ou de chlore ; P¹, P² et P³ sont indépendamment un groupe polymérisable ; SP¹, SP² et SP³ sont indépendamment une liaison simple ou un alkylène ayant 1 à 10 carbones, et dans l'alkylène au moins un -CH₂- peut être remplacé par -O-, -COO-, -OCO- ou -OCOO-, au moins un -CH₂-CH₂- peut être remplacé par -CH=CH-ou -C≡C-, et dans ces groupes au moins un hydrogène peut être remplacé par un atome de fluor ou de chlore ; d est 0, 1 ou 2 ; e, f et g sont indépendamment 0, 1, 2, 3 ou 4 ; et la somme de e, f et g est de 1 ou plus.

12. Composition de cristaux liquides selon la revendication 11, dans laquelle dans la formule (4), P¹, P² et P³ sont indépendamment un groupe polymérisable choisi dans le groupe des composés représentés par la formule (P-1) à la formule (P-5) : 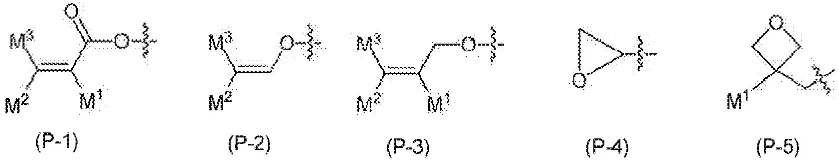 dans la formule (P-1) à la formule (P-5), M¹, M² et M³ sont indépendamment un atome d'hydrogène, un atome de fluor, un alkyle ayant 1 à 5 carbones ou un alkyle ayant 1 à 5 carbones dans lequel au moins un hydrogène a été remplacé par un atome de fluor ou de chlore.

13. Composition de cristaux liquides selon la revendication 11 ou 12, dans laquelle la proportion du second additif est dans la plage de 0,03 à 10 % en poids, sur la base du poids de la composition de cristaux liquides.

14. Dispositif d'affichage à cristaux liquides comprenant la composition de cristaux liquides selon l'une quelconque des revendications 1 à 13.

15. Utilisation de la composition de cristaux liquides selon l'une quelconque des revendications 1 à 14 dans un dispositif d'affichage à cristaux liquides.
